(19) Europäisches Patentamt
European Patent Office
Office européen des brevets

(11) **EP 4 654 653 A1**

(12) **EUROPEAN PATENT APPLICATION**
published in accordance with Art. 153(4) EPC

(43) Date of publication:
**26.11.2025 Bulletin 2025/48**

(21) Application number: 24744209.8

(22) Date of filing: **15.01.2024**

(51) International Patent Classification (IPC):
*H04W 24/08* (2009.01)

(52) Cooperative Patent Classification (CPC):
**H04B 7/06; H04L 1/1812; H04L 5/00; H04W 24/08;
H04W 72/20; H04W 72/23; H04W 72/231;
H04W 72/232**

(86) International application number:
**PCT/CN2024/072313**

(87) International publication number:
**WO 2024/153033 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.01.2023   CN 202310200461
07.03.2023   CN 202310210124**

(71) Applicant: **Apogee Networks, LLC
Dallas, TX 75201 (US)**

(72) Inventors:
• **WU, Lu
  Shanghai 201206 (CN)**
• **ZHANG, Xiaobo
  Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS USED IN NODE FOR WIRELESS COMMUNICATION**

(57)    Disclosed in the present application are a method and apparatus used in a node for wireless communication. A first node receives a first CSI report configuration, the first CSI report configuration being used for configuring a first RS resource set, and the first RS resource set comprising at least one RS resource configured for at least one of channel measurement or interference measurement. A first physical layer channel is configured for the first CSI report; the first RS resource set comprises, in a time domain, some or all time domain resources in a first time window; the processing for the first CSI report on the first physical layer channel depends on whether the first RS resource set is executed in the first time window or not; and the execution is transmission, or the execution is reception.

Fig. 1

**Description**

**Technical Field**

The present application relates to a transmission method and apparatus in a wireless communication system, in particular to a measurement scheme and apparatus in a wireless communication system.

**Background Art**

Network Energy Saving (NES) is of great significance for environmental sustainability, reducing impacts on the environment (greenhouse gas emissions), and saving operating costs. With the popularity of 5G (the 5rd Generation Partnership Project) in industries and geographic regions, very high data rates are required to handle more advanced services and applications (such as XR), resulting in increasingly dense networks, and the use of more antennas, larger bandwidths, and more frequency bands. In order to keep the impact of 5G on the environment within a controllable range, new solutions need to be studied to improve network energy saving. Therefore, the RAN#94 meeting of 3GPP (the 3rd Generation Partnership Project) approved a study item (SI) of "Study on network energy savings", which studies technical enhancements in aspects of time domains, frequency domains, spatial domains, power domains, etc.

**Summary of the Invention**

In an existing system, UE determines a CSI (Channel State Information) report according to a configured CSI report and an RS (Reference Signal) resource set. In a future energy-saving scenario based on a base station, a reference signal resource may not be transmitted or received in some time windows, which in turn affects how to process a corresponding CSI report.

In view of the above, the present application discloses a solution. It should be noted that in the description of the present application, energy saving is only used as a typical application scenario or example; and the technical solution in the present application is also applicable to other scenarios facing similar problems (such as other non-base station energy saving scenarios, including but not limited to capacity enhancement systems, short-range communication systems, unlicensed frequency domain communication, IoT (Internet of Things), URLLC (Ultra Reliable Low Latency Communication) networks, Internet of Vehicles, etc.), and similar technical effects can be achieved. In addition, using a unified solution in different scenarios (including but not limited to base station energy saving scenarios) also helps to reduce hardware complexity and costs. In the case of no conflict, embodiments in a first node of the present application and features in the embodiments can be applied to a second node, and vice versa.

In particular, the interpretation of the terminology, nouns, functions, and variables in the present application (if not otherwise specified) can refer to the definitions in 3GPP specification protocol TS36 series, TS38 series, and TS37 series. If necessary, reference can be made to 3GPP standards TS38.211, TS38.212, TS38.213, TS38.214, TS38.215, TS38.321, TS38.331, TS38.305, TS38.304, and TS37.355 to assist in understanding the present application.

The present application discloses a method used in a first node for wireless communication, characterized by comprising:

receiving a first CSI report configuration, the first CSI report configuration being used for configuring a first RS resource set, and the first RS resource set comprising at least one RS resource configured for at least one of channel measurement or interference measurement,

wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission.

As one embodiment, a problem to be solved by the present application comprises: how to process a corresponding CSI report when an RS resource is not transmitted in one time window.

As one embodiment, the benefit of adopting the above method is that a CSI report takes into account that the RS resource may not be transmitted within one time window, ensuring the accuracy of the CSI report, and improving system performance.

The present application discloses a method used in a first node for wireless communication, characterized by comprising:

receiving a first CSI report configuration, the first CSI report configuration being used for configuring a first RS resource set, and the first RS resource set comprising at least one RS resource configured for at least one of channel measurement or interference measurement,
wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is reception.

As one embodiment, a problem to be solved by the present application comprises: how to process a corresponding CSI report when an RS resource is not received in one time window.

As one embodiment, the benefit of adopting the above method is that a CSI report takes into account that the RS resource may not be received within one time window, ensuring the accuracy of the CSI report, and improving system performance.

According to one aspect of the present application, it is characterized by comprising:

transmitting the first CSI report on the first physical layer channel, or abandoning transmitting the first CSI report on the first physical layer channel,
wherein the processing for the first CSI report on the first physical layer channel comprises whether the first CSI report is transmitted on the first physical layer channel; when the first RS resource set is executed in the first time window, the first CSI report is transmitted on the first physical layer channel; and when the first RS resource set is not executed in the first time window, the first CSI report is abandoned from being transmitted on the first physical layer channel.

As one embodiment, the advantage of adopting the above method is that whether the CSI report is transmitted takes into account that an RS resource may not be transmitted or received in one time window, saving a system resource, and improving system performance.

According to one aspect of the present application, it is characterized by comprising:

transmitting the first CSI report on the first physical layer channel,
wherein when the first RS resource set is executed in the first time window, the first RS resource set in the first time window is used for at least one of channel measurement or interference measurement for the first CSI report; and when the first RS resource set is not executed in the first time window, the first CSI report on the first physical layer channel is not updated.

As one embodiment, the advantage of adopting the above method is that whether a CSI report is updated takes into account that an RS resource may not be transmitted or received in one time window, ensuring the accuracy of the CSI report, and improving system performance.

According to one aspect of the present application, it is characterized in that the processing for the first CSI report on the first physical layer channel comprises whether a CSI processing unit is occupied from a first symbol for the first CSI report on the first physical layer channel; and when the first RS resource set is executed in the first time window, the first CSI report on the first physical layer channel occupies a CSI processing unit from the first symbol.

As one embodiment, the advantage of adopting the above method is that whether a CSI report occupies a CSI processing unit takes into account that an RS resource may not be transmitted or received in one time window, saving a CSI processing unit.

According to one aspect of the present application, it is characterized in that the first RS resource set is executed in the first time window, and the first CSI report on the first physical layer channel occupies a CSI processing unit from the first symbol to the last symbol of the first physical layer channel.

According to one aspect of the present application, it is characterized in that a start symbol of the first time window is a first symbol of the earliest RS resource of the first RS resource set in a first occasion set, or the start symbol of the first time window is a first symbol of the earliest RS occasion in the first occasion set; and the first occasion set comprises the latest RS occasion of each RS resource in the first RS resource set that is not later than a CSI reference resource of the first CSI report on the first physical layer channel.

According to one aspect of the present application, it is characterized by comprising:

receiving a first information block,
wherein the first information block is used for determining a first time unit set; whether the first RS resource set is executed in the first time window or not depends on whether time domain resources occupied by the first RS resource set in the first time window are orthogonal to the first time unit set; when the time domain resources occupied by the first RS resource set in the first time window are orthogonal to the first time unit set, the first RS resource set is executed in the first time window; and when the time domain resources occupied by the first RS resource set in the first time window belong to the first time unit set, the first RS resource set is not executed in the first time window.

According to one aspect of the present application, it is characterized in that whether the first RS resource set is executed in the first time window or not depends on whether the first physical layer channel and a second time unit set are orthogonal in a time domain; when the first physical layer channel and the second time unit set are orthogonal in the time domain, the first RS resource set is executed in the first time window; and when the first physical layer channel belongs to the second time unit set in the time domain, the first RS resource set is not executed in the first time window.

The present application discloses a method used in a second node for wireless communication, characterized by comprising:

> transmitting a first CSI report configuration, the first CSI report configuration being used for configuring a first RS resource set, and the first RS resource set comprising at least one RS resource configured for at least one of channel measurement or interference measurement,
> wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission.

The present application discloses a method used in a second node for wireless communication, characterized by comprising:

> transmitting a first CSI report configuration, the first CSI report configuration being used for configuring a first RS resource set, and the first RS resource set comprising at least one RS resource configured for at least one of channel measurement or interference measurement,
> wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is reception.

According to one aspect of the present application, it is characterized by comprising:

> receiving the first CSI report on the first physical layer channel, or abandoning receiving the first CSI report on the first physical layer channel,
> wherein the processing for the first CSI report on the first physical layer channel comprises whether the first CSI report is transmitted on the first physical layer channel; when the first RS resource set is executed in the first time window, the first CSI report is transmitted on the first physical layer channel; and when the first RS resource set is not executed in the first time window, the first CSI report is abandoned from being transmitted on the first physical layer channel.

According to one aspect of the present application, it is characterized by comprising:

> receiving the first CSI report on the first physical layer channel,
> wherein when the first RS resource set is executed in the first time window, the first RS resource set in the first time window is used for at least one of channel measurement or interference measurement for the first CSI report; andwhen the first RS resource set is not executed in the first time window, the first CSI report on the first physical layer channel is not updated.

According to one aspect of the present application, it is characterized in that the processing for the first CSI report on the first physical layer channel comprises whether a CSI processing unit is occupied from a first symbol for the first CSI report on the first physical layer channel; and when the first RS resource set is executed in the first time window, the first CSI report on the first physical layer channel occupies a CSI processing unit from the first symbol.

According to one aspect of the present application, it is characterized in that the first RS resource set is executed in the first time window, and the first CSI report on the first physical layer channel occupies a CSI processing unit from the first symbol to the last symbol of the first physical layer channel.

According to one aspect of the present application, it is characterized in that a start symbol of the first time window is a first symbol of the earliest RS resource of the first RS resource set in a first occasion set, or the start symbol of the first time window is a first symbol of the earliest RS occasion in the first occasion set; and the first occasion set comprises the latest RS occasion of each RS resource in the first RS resource set that is not later than a CSI reference resource of the first CSI report on the first physical layer channel.

According to one aspect of the present application, it is characterized by comprising:

transmitting a first information block,

wherein the first information block is used for determining a first time unit set; whether the first RS resource set is executed in the first time window or not depends on whether time domain resources occupied by the first RS resource set in the first time window are orthogonal to the first time unit set; when the time domain resources occupied by the first RS resource set in the first time window are orthogonal to the first time unit set, the first RS resource set is executed in the first time window; and when the time domain resources occupied by the first RS resource set in the first time window belong to the first time unit set, the first RS resource set is not executed in the first time window.

According to one aspect of the present application, it is characterized in that whether the first RS resource set is executed in the first time window or not depends on whether the first physical layer channel and a second time unit set are orthogonal in a time domain; when the first physical layer channel and the second time unit set are orthogonal in the time domain, the first RS resource set is executed in the first time window; and when the first physical layer channel belongs to the second time unit set in the time domain, the first RS resource set is not executed in the first time window.

The present application discloses a first node device used for wireless communication, characterized by comprising:

a first receiver for receiving a first CSI report configuration, the first CSI report configuration being used for configuring a first RS resource set, and the first RS resource set comprising at least one RS resource configured for at least one of channel measurement or interference measurement,

wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission.

The present application discloses a first node device used for wireless communication, characterized by comprising:

a first receiver for receiving a first CSI report configuration, the first CSI report configuration being used for configuring a first RS resource set, and the first RS resource set comprising at least one RS resource configured for at least one of channel measurement or interference measurement,

wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is reception.

The present application discloses a second node device used for wireless communication, characterized by comprising:

a second transmitter for transmitting a first CSI report configuration, the first CSI report configuration being used for configuring a first RS resource set, and the first RS resource set comprising at least one RS resource configured for at least one of channel measurement or interference measurement,

wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission.

The present application discloses a second node device used for wireless communication, characterized by comprising:

a second transmitter for transmitting a first CSI report configuration, the first CSI report configuration being used for configuring a first RS resource set, and the first RS resource set comprising at least one RS resource configured for at least one of channel measurement or interference measurement,

wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is reception.

## Brief description of the drawings

Other features, purposes and advantages of the present application will become more apparent by reading the detailed description of the non-limiting embodiments in the following drawings with reference to them:

FIG. 1 shows a flowchart of a first CSI report configuration according to one embodiment of the present application;

FIG. 2 shows a schematic diagram of a network architecture according to one embodiment of the present application;

FIG. 3 shows a schematic diagram of an embodiment of a wireless protocol architecture of a user plane and a control plane according to one embodiment of the present application;

FIG. 4 shows a schematic diagram of a first communication device and a second communication device according to one embodiment of the present application;

FIG. 5 shows a flowchart of wireless transmission according to one embodiment of the present application;

FIG. 6 shows a schematic diagram of processing for the first CSI report on the first physical layer channel according to one embodiment of the present application;

FIG. 7 shows a schematic diagram of the processing for the first CSI report on the first physical layer channel according to another embodiment of the present application;

FIG. 8 shows a schematic diagram of the processing for the first CSI report on the first physical layer channel according to another embodiment of the present application;

FIG. 9 shows a schematic diagram of occupation of a CSI processing unit according to one embodiment of the present application;

FIG. 10 shows a schematic diagram of the occupation of the CSI processing unit according to another embodiment of the present application;

FIGS. 11A-11B respectively show schematic diagrams of a first time window according to one embodiment of the present application;

FIG. 12 shows a structural block diagram of a processing device used in a first node device according to one embodiment of the present application; and

FIG. 13 shows a structural block diagram of a processing device used in a second node device according to one embodiment of the present application.

## Detailed Description of Embodiments

The technical solution of the present application will be further described in detail below in conjunction with the accompanying drawings. It should be noted that, in the case of no conflict, embodiments in the present application and features in the embodiments can be arbitrarily combined with each other.

## Embodiment 1

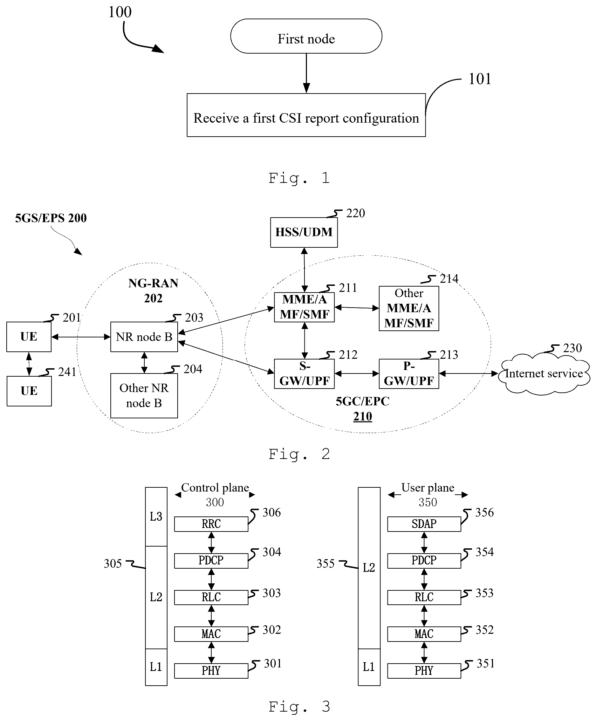

Embodiment 1 illustrates a flowchart of a first CSI report configuration according to one embodiment of the present application, as shown in FIG. 1. In 100 shown in FIG. 1, each block represents one step.

In Embodiment 1, the first node in the present application receives a first CSI report configuration in step 101, the first CSI report configuration being used for configuring a first RS resource set, and the first RS resource set comprising at least one RS resource configured for at least one of channel measurement or interference measurement,wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission, or the execution is reception.

As one embodiment, only RS occasions orthogonal to the first time unit set of the first RS resource set are transmitted.

As one embodiment, only RSs on RS occasions orthogonal to the first time unit set of the first RS resource set are transmitted.

As one embodiment, RS occasions belonging to the first time unit set of the first RS resource set are not transmitted.

As one embodiment, RS occasions belonging to the first time unit set of the first RS resource set are abandoned from being received.

As one embodiment, RSs on RS occasions belonging to the first time unit set of the first RS resource set are not transmitted.

As one embodiment, RSs on RS occasions belonging to the first time unit set of the first RS resource set are abandoned from being received.

As one embodiment, an RS occasion of a CSI-RS resource is a CSI-RS occasion.

As one embodiment, an RS occasion of a CSI-IM resource is a CSI-IM occasion.

As one embodiment, an RS occasion of an SSB resource is an SSB occasion.

As one embodiment, an RS occasion of an SS/PBCH block resource is an SS/PBCH block occasion.

As one embodiment, the RS occasion comprises one or more of a CSI-RS occasion, a CSI-IM occasion, or an SSB occasion.

As one embodiment, the RS occasion comprises one or more of a CSI-RS occasion, a CSI-IM occasion, or an SS/PBCH block occasion.

The above-mentioned CSI-RS resource, CSI-IM resource, or SSB resource occupies multiple slots in a time domain, wherein a portion within one slot is referred to as one RS occasion.

The above-mentioned CSI-RS resource, CSI-IM resource, or SS/PBCH block resource occupies multiple slots in a time domain, wherein a portion within one slot is referred to as one RS occasion.

Typically, when one RS resource occupies multiple slots in a time domain, wherein a portion within one slot is referred to as one RS occasion.

As one embodiment, the first RS resource set comprises at least one RS resource configured for channel measurement.

As one embodiment, the first RS resource set comprises at least one RS resource configured for interference measurement.

As one embodiment, the first RS resource set comprises at least one RS resource configured for channel measurement and interference measurement.

As one embodiment, the first RS resource set comprises multiple RS resources configured for channel measurement.

As one embodiment, the first RS resource set comprises multiple RS resources configured for interference measurement.

As one embodiment, the first RS resource set comprises multiple RS resources configured for channel measurement and interference measurement.

As one embodiment, the first RS resource set comprises a CSI-RS (Channel State Information-Reference Signal)/CSI-IM (Channel State Information-Interference Measurement)/SSB resource configured for channel measurement or interference measurement.

As one embodiment, the SSB is an abbreviation of Synchronization Signal Block.

As one embodiment, the SSB is an abbreviation of Synchronization Signal/Physical Broadcast Channel Block.

As one embodiment, an RS resource configured for channel measurement in the first RS resource set is a CSI-RS (Channel State Information-Reference Signal) resource.

As one embodiment, an RS resource configured for channel measurement in the first RS resource set is an NZP (Non-Zero Power) CSI-RS (Channel State Information-Reference Signal) resource.

As one embodiment, a CSI-RS resource configured for channel measurement in the first RS resource set is an NZP CSI-RS resource.

As one embodiment, an RS resources configured for channel measurement in the first RS resource set comprises at least one of a CSI-RS (Channel State Information-Reference Signal) resource or an SS/PBCH (Synchronization Signal/Physical Broadcast Channel) block resource.

As one embodiment, an RS resource configured for channel measurement in the first RS resource set comprises at least one of a CSI-RS (Channel State Information-Reference Signal) resource or an SSB resource.

As one embodiment, an RS resource configured for interference measurement in the first RS resource set comprises at least one of a CSI-IM (Channel State Information-Interference Measurement) resource or an NZP CSI-RS resource for interference measurement.

As one embodiment, an RS resource configured for interference measurement in the first RS resource set comprises at least a CSI-IM resource in a CSI-IM (Channel State Information-Interference Measurement) resource or an NZP CSI-RS resource for interference measurement.

As one embodiment, an RS resource configured for interference measurement in the first RS resource set comprises a CSI-IM resource.

As one embodiment, an RS resource configured for interference measurement in the first RS resource set comprises a CSI-IM resource and an NZP CSI-RS resource for interference measurement.

Typically, CSI-IM is a zero-power reference signal.

As one embodiment, the first CSI (Channel Status Information) report configuration is carried by a higher layer signaling.

As one embodiment, the first CSI report configuration is carried by an RRC signaling.

As one embodiment, the first CSI report configuration comprises one RRC IE (Information Element).

As one embodiment, the first CSI report configuration comprises one or more RRC IEs.

As one embodiment, the first CSI report configuration is IE CSI-ReportConfig.

As one embodiment, a name of the first CSI report configuration comprises CSI-ReportConfig.

As one embodiment, the first CSI resource configuration is one IE CSI-ResourceConfig.

As one embodiment, the first CSI report configuration comprises at least one CSI resource configuration, and the at least one CSI resource configuration is used for configuring the first RS resource set.

As one embodiment, the at least one CSI resource configuration comprises an index of each RS resource in the first RS resource set.

As one embodiment, the at least one CSI resource configuration comprises an identifier of each RS resource in the first RS resource set.

As one embodiment, the at least one CSI resource configuration is used for configuring each RS resource in the first RS resource set.

As one embodiment, the at least one CSI resource configuration comprises configuration information of each RS resource in the first RS resource set.

As one embodiment, the first CSI report configuration comprises one CSI resource configuration, and the one CSI resource configuration is used for configuring an RS resource configured for channel measurement in the first RS resource set.

As one sub-embodiment of the above embodiment, the one CSI resource configuration is one IE CSI-ResourceConfig.

As one sub-embodiment of the above embodiment, the first CSI report configuration comprises a resources-ForChannelMeasurement field, and the resourcesForChannelMeasurement field included in the first CSI report configuration indicates the one CSI resource configuration.

As one embodiment, the first CSI report configuration comprises two CSI resource configurations, and the two CSI resource configurations are respectively used for configuring an RS resource configured for channel measurement in the first RS resource set and an RS resource configured for interference measurement in the first RS resource set.

As one sub-embodiment of the above embodiment, the two CSI resource configurations are two IE CSI-ResourceConfigs.

As one sub-embodiment of the above embodiment, the first CSI report configuration comprises a resources-ForChannelMeasurement field and a csi-IM-ResourcesForInterference field, and the resourcesForChannelMeasurement field and the csi-IM-ResourcesForInterference field included in the first CSI report configuration respectively indicate the two CSI resource configurations.

As one embodiment, the first CSI report configuration comprises two CSI resource configurations, and the two CSI resource configurations are respectively used for configuring an RS resource configured for channel measurement in the first RS resource set and a CSI-IM resource configured for interference measurement in the first RS resource set.

As one sub-embodiment of the above embodiment, the two CSI resource configurations are two IE CSI-ResourceConfigs.

As one sub-embodiment of the above embodiment, the first CSI report configuration comprises a resources-ForChannelMeasurement field and a csi-IM-ResourcesForInterference field, and the resourcesForChannelMeasurement field and the csi-IM-ResourcesForInterference field included in the first CSI report configuration respectively indicate the two CSI resource configurations.

As one embodiment, the first CSI report configuration comprises three CSI resource configurations, and the three CSI resource configurations are respectively used for configuring an RS resource configured for channel measurement in the first RS resource set, a CSI-IM resource configured for interference measurement in the first RS resource set, and an NZP CSI-RS resource configured for interference measurement in the first RS resource set.

As one sub-embodiment of the above embodiment, the three CSI resource configurations are three IE CSI-ResourceConfigs.

As one sub-embodiment of the above embodiment, the first CSI report configuration comprises a resources-ForChannelMeasurement field, a csi-IM-ResourcesForInterference field and an nzp-CSI-RS-ResourcesForInterference field, and the resourcesForChannelMeasurement field, the csi-IM-ResourcesForInterference field and the nzp-CSI-RS-ResourcesForInterference field included in the first CSI report configuration respectively indicate the three CSI resource configurations.

As one embodiment, specific definitions of IE CSI-ReportConfig, resourcesForChannelMeasurement, csi-IM-ResourcesForInterference, nzp-CSI-RS-ResourcesForInterference, and IE CSI-ResourceConfi refer to Section 6.3.2 of 3GPP TS 38.331.

As one embodiment, the first physical layer channel is a PUCCH or a PUSCH.

As one embodiment, the first physical layer channel is a PUCCH.

As one embodiment, the first physical layer channel is a PUSCH.

As one embodiment, the first CSI report is one of a periodic CSI report, a semi-persistent CSI report, or an aperiodic CSI report, and the first physical layer channel is a PUCCH or a PUSCH.

As one embodiment, the first CSI report is a periodic CSI report or a semi-persistent CSI report, and the first physical layer channel is a PUCCH or a PUSCH.

As one embodiment, the first CSI report on the first physical layer channel is a CSI report of a periodic CSI report or a semi-persistent CSI report in one report cycle.

As one embodiment, the first CSI report on the first physical layer channel is a CSI report of a periodic CSI report in one report cycle.

As one embodiment, the first CSI report on the first physical layer channel is a CSI report of a semi-persistent CSI report in one report cycle.

As one embodiment, the first CSI report is a periodic CSI report or a semi-persistent CSI report, and the first physical layer channel is a PUCCH.

As one embodiment, the first CSI report is a periodic CSI report, and the first physical layer channel is a PUCCH.

As one embodiment, the first CSI report is a semi-persistent CSI report, and the first physical layer channel is a PUCCH or a PUSCH.

As one embodiment, the first CSI report is a semi-persistent CSI report, and the first physical layer channel is a PUCCH.

As one embodiment, the first CSI report configuration comprises a reportConfigType (report configuration type) field; and the reportConfigType (report configuration type) field in the first CSI report configuration indicates which of the following is the first CSI report: periodic, semi-persistent on PUSCH, semi-persistent on PUCCH, or aperiodic.

As one embodiment, the first CSI report configuration comprises a reportConfigType (report configuration type) field; when the reportConfigType (report configuration type) field in the first CSI report configuration is semiPersistentOnPUSCH (semi-persistent on PUSCH), the first physical layer channel is a PUSCH; and when the reportConfigType field in the first CSI report configuration is periodic, the first physical layer channel is a PUCCH.

As one embodiment, the first CSI report configuration comprises a reportConfigType (report configuration type) field; and the reportConfigType field in the first CSI report configuration is periodic, and the first physical layer channel is a PUCCH.

As one embodiment, the first CSI report configuration comprises a reportConfigType (report configuration type) field; and the reportConfigType field in the first CSI report configuration is semiPersistentOnPUCCH (semi-persistent on PUCCH), and the first physical layer channel is a PUCCH.

As one embodiment, the first CSI report configuration comprises a reportConfigType (report configuration type) field; and the reportConfigType field in the first CSI report configuration is semiPersistentOnPUSCH (semi-persistent on PUSCH), and the first physical layer channel is a PUSCH.

As one embodiment, the first CSI report configuration indicates a report quantity included in the first CSI report.

As one embodiment, the first CSI report configuration comprises a reportQuantity field, and the reportQuantity field in the first CSI report configuration indicates a report quantity included in the first CSI report.

As one embodiment, the report quantity included in the first CSI report comprises at least one of CQI (Channel quality indicator), PMI (Precoding Matrix Indicator), CRI (CSI-RS Resource Indicator), SS/PBCH Block Resource Indicator (SSBRI), Layer Indicator (LI), RI (Rank Indicator), L1-RSRP (Layer 1 reference signal received power) or L1-SINR (Layer 1 signal-to-noise and interference ratio).

As one embodiment, the first time window comprises at least one symbol.

As one embodiment, the first time window comprises multiple symbols.

As one embodiment, the first time window comprises multiple consecutive symbols.

As one embodiment, the first time window comprises one symbol or multiple consecutive symbols.

As one embodiment, the first time window comprises at least one RS occasion of at least one RS resource in the first RS resource set.

As one embodiment, the first time window only comprises at least one RS occasion of at least one RS resource in the first RS resource set.

As one embodiment, the first time window comprises one RS occasion of each RS resource in the first RS resource set.

As one embodiment, the first time window only comprises one RS occasion of each RS resource in the first RS resource set.

As one embodiment, the first time window also comprises a time domain resource other than the first RS resource set.

As one embodiment, the first RS resource set only comprises, in a time domain, some or all of time domain resources in a first time window.

As one embodiment, the first RS resource set also comprises, in a time domain, a time domain resource outside a first time window.

As one embodiment, the first RS resource set comprises, in a time domain, some of time domain resources in a first time window.

As one embodiment, the first RS resource set comprises, in a time domain, a first time window.

As one embodiment, at least one RS resource in the first RS resource set comprises, in a time domain, some or all of time domain resources in a first time window.

As one embodiment, at least one RS resource in the first RS resource set comprises, in a time domain, some of time domain resources in a first time window.

As one embodiment, each RS resource in the first RS resource set comprises, in a time domain, some or all of time domain resources in a first time window.

As one embodiment, each RS resource in the first RS resource set comprises, in a time domain, some of time domain resources in a first time window.

As one embodiment, at least one RS occasion of at least one RS resource in the first RS resource set belongs to the first time window.

As one embodiment, one RS occasion of at least one RS resource in the first RS resource set belongs to the first time window.

As one embodiment, only one RS occasion of at least one RS resource in the first RS resource set belongs to the first time window.

As one embodiment, at least one RS occasion of each RS resource in the first RS resource set belongs to the first time window.

As one embodiment, one RS occasion of each RS resource in the first RS resource set belongs to the first time window.

As one embodiment, only one RS occasion of each RS resource in the first RS resource set belongs to the first time window.

As one embodiment, one RS occasion of at least one RS resource in the first RS resource set is outside the first time window.

As one embodiment, one RS occasion of each RS resource in the first RS resource set is outside the first time window.

As one embodiment, each occasion of each RS resource in the first RS resource set belongs to the first time window.

As one embodiment, at least one occasion of at least one RS resource in the first RS resource set belongs to the first time window, and at least one occasion of at least one RS resource in the first RS resource set is outside the first time window.

As one embodiment, the time domain resource comprises a symbol.

As one embodiment, the time domain resource comprises a time unit.

As one embodiment, the time domain resource comprises a subframe.

As one embodiment, the time domain resource comprises a moment.

As one embodiment, the time domain resource comprises a slot.

As one embodiment, the symbol is a single-carrier symbol.

As one embodiment, the symbol is a multi-carrier symbol.

As one embodiment, the symbol is an OFDM (Orthogonal Frequency Division Multiplexing) symbol.

As one embodiment, the symbol is obtained after the output of transform precoding undergoes OFDM symbol generation.

As one embodiment, the symbol is a DFT-S-OFDM (Discrete Fourier Transform Spread OFDM) symbol.

As one embodiment, the multi-carrier symbol is an OFDM (Orthogonal Frequency Division Multiplexing) symbol.

As one embodiment, the symbol is obtained after the output of transform precoding undergoes OFDM symbol generation.

As one embodiment, the symbol is an SC-FDMA (Single Carrier-Frequency Division Multiple Access) symbol.

As one embodiment, the symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, the execution is transmission.

As one embodiment, the execution is reception.

As one embodiment, the execution is transmission, and "whether the first RS resource set is executed in a first time window or not" means whether the first RS resource set is transmitted by a sender of the first CSI report configuration in the first time window.

As one embodiment, the execution is transmission, and "whether the first RS resource set is executed in a first time window or not" means whether the first RS resource set is transmitted by the second node in the first time window or not.

As one embodiment, the execution is reception, and "whether the first RS resource set is executed in a first time window or not" means whether the first RS resource set is received by the first node in the first time window or not.

As one embodiment, the execution is reception, and "whether the first RS resource set is executed in a first time window" means whether the first RS resource set is received by a recipient of the first CSI report configuration in the first time window.

As one embodiment, "the processing for the first CSI report on the first physical layer channel" comprises: comprising whether the first CSI report is transmitted on the first physical layer channel.

As one embodiment, "the processing for the first CSI report on the first physical layer channel" comprises: comprising whether the first CSI report is abandoned from being transmitted on the first physical layer channel.

As one embodiment, "the processing for the first CSI report on the first physical layer channel" comprises: comprising whether the first CSI report is transmitted by the first node on the first physical layer channel.

As one embodiment, "the processing for the first CSI report on the first physical layer channel" comprises: comprising whether the first CSI report on the first physical layer channel is updated.

As one embodiment, "the processing for the first CSI report on the first physical layer channel" comprises: targeting whether the first CSI report on the first physical layer channel occupies a CSI processing unit (CPU) from a first symbol.

As one embodiment, "the processing for the first CSI report on the first physical layer channel" comprises: whether the first CSI report on the first physical layer channel occupies a CSI processing unit from a first symbol to the last symbol of the first physical layer channel.

## Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of the LTE, LTE-A and future 5G systems is referred to as an EPS (Evolved Packet System) 200. The 5G NR or LTE network architecture 200 may be referred to as an 5GS (5G System)/EPS (Evolved Packet System) 200 or some other suitable terms. The 5GS/EPS 200 may comprise one or more pieces of UE (User Equipment) 201, one piece of UE241 performing sidelink communication with UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B (gNB) 203 and other gNB204. The gNB203 provides user and control plane protocol termination toward the UE201. The gNB203 may be connected to other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP (transmitter receiver point), or some other suitable terms. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video device, a digital audio player (e.g., an MP3 player), a camera, a game console, a drone, an aircraft, a narrowband physical network device, a machine type communication device, a land vehicle, a car, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the 5GC/EPC210 via an S1/NG interface. The 5GC/EPC210 comprises MME (Mobility Management Entity)/AMF (Authentication Management Field)/SMF (Session Management Function) 211, other MME/AMF/SMF214, S-GW (Service Gateway)/UPF (User Plane Function) 212, and P-GW (Packet Data Network Gateway)/UPF213. The MME/AMF/SMF211 is a control node that handles a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise Internet, intranet, IMS (IP Multimedia Subsystem) and packet switching services.

As one embodiment, the first node in the present application comprises the UE201.

As one embodiment, the first node in the present application comprises the UE241.

As one embodiment, the second node in the present application comprises the gNB203.

As one embodiment, the UE201 supports Energy Saving on a base station side.

As one embodiment, the UE201 supports the reception of cell DRX.

As one embodiment, the gNB203 supports Energy Saving on a base station side.

As one embodiment, the gNB203 supports the transmission of cell DTX.

**Embodiment 3**

Embodiment 3 illustrates a schematic diagram of an embodiment of a wireless protocol architecture of a user plane and a control plane according to one embodiment of the present application, as shown in FIG. 3.

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300. FIG. 3 shows the radio protocol architecture of the control plane 300 used between a first communication node device (UE, gNB or RSU in V2X) and a second communication node device (gNB, UE or RSU in V2X), or between two pieces of UE using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above the PHY301, and is responsible for a link between the first communication node device and the second communication node device, or between two pieces of UE. The L2 layer 305 includes a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembling of upper layer data packets, retransmission of lost data packets, and reordering of data packets to compensate for out-of-order reception due to HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operation. An RRC (Radio Resource Control) sublayer 306 in Layer 3 (L3 layer) in the control plane 300 is responsible for acquiring radio resources (i.e., radio bearers) and configuring a lower layer using an RRC signaling between the second communication node device and the first communication node device. The radio protocol architecture of the user plane 350 includes Layer 1 (L1 layer) and Layer 2 (L2 layer). The radio protocol architecture for the first communication node device and the second communication node device in the user plane 350 is substantially the same as corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce radio transmission overhead. The L2 layer 355 in the user plane 350 also includes an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, including a network layer (e.g., an IP layer) terminating at a P-GW on a network side and an application layer terminating at another end (e.g., remote UE, a server, etc.) of connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first CSI configuration information is generated in the RRC sublayer 306.

As one embodiment, the first information block is generated in the RRC sublayer 306.

As one embodiment, the first information block is generated in the MAC sublayer 302.

As one embodiment, the first information block is generated in the MAC sublayer 352.

As one embodiment, the first information block is generated in the PHY301.

As one embodiment, the first information block is generated in the PHY351.

As one embodiment, the second information block is generated in the RRC sublayer 306.

As one embodiment, the second information block is generated in the MAC sublayer 302.

As one embodiment, the second information block is generated in the MAC sublayer 352.

As one embodiment, the second information block is generated in the PHY301.

As one embodiment, the second information block is generated in the PHY351.

As one embodiment, the first RS resource set is generated in the PHY301.

As one embodiment, the first RS resource set is generated in the PHY351.

As one embodiment, the first CSI report is generated in the PHY301.

As one embodiment, the first CSI report is generated in the PHY351.

## Embodiment 4

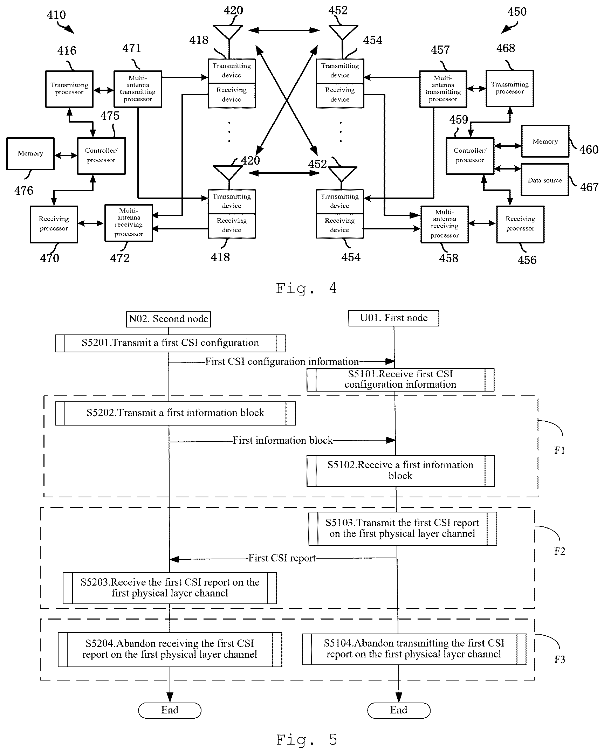

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, an upper layer data packet from a core network is provided to the controller/processor 475. The controller/processor 475 implements the functionality of the L2 layer. In DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for the L1 layer (i.e., physical layer). The transmitting processor 416 implements encoding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, including codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or a frequency domain, and then uses an inverse fast Fourier transform (IFFT) to generate a physical channel carrying a time domain multi-carrier symbol stream. The multi-antenna transmitting processor 471 then performs sending analog precoding/beamforming operation on the time domain multi-carrier symbol stream. Each transmitting device 418 converts a baseband multi-carrier symbol stream provided by the multi-antenna transmitting processor 471 into a radio frequency stream, and then provides it to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, and converts a radio frequency stream into a baseband multi-carrier symbol stream and provides it to the receiving processor 456. The receiving processor 456 and the multi-antenna receiving processor 458 implement various signal processing functions of the L1 layer. The multi-antenna receiving processor 458 performs receiving analog precoding/beamforming operation on the baseband multi-carrier symbol stream from the receiving device 454. The receiving processor 456 uses a Fast Fourier Transform (FFT) to convert the baseband multi-carrier symbol stream subjected to the receiving analog precoding/-beamforming operation from the time domain to the frequency domain. In the frequency domain, a physical layer data signal and the reference signal are demultiplexed by the receiving processor 456, wherein the reference signal will be used for channel estimation, and the data signal undergoes multi-antenna detection in the multi-antenna receiving processor 458 to recover any parallel stream destined for the second communication device 450. The symbols on each parallel stream are demodulated and recovered in the receiving processor 456, and soft decisions are generated. The receiving processor 456 then decodes and deinterleaves the soft decisions to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores a program code and data. The memory 460 may be referred to as computer-readable media. In DL (DownLink), the controller/processor 459 provides demultiplexing between transport and logical channels, packet reassembly, decryption, header decompression, and control signal processing to recover upper layer data packets from a core network. The upper layer data packets are then provided to all protocol layers above the L2 layer. Various control signals may also be provided to L3 for L3 processing. The controller/processor 459 is also responsible for error detection using an acknowledgement (ACK) and/or negative acknowledgement (NACK) protocol to support HARQ operations.

In the transmission from the second communication device 450 to the first communication device 410, at the second communication device 450, the upper layer data packets are provided to the controller/processor 459 using the data source 467. The data source 467 represents all protocol layers above the L2 layer. Similar to a transmission function at the first communication device 410 described in DL, the controller/processor 459 implements header compression, encryption, packet segmentation and reordering, and multiplexing between logical and transport channels based on the radio resource allocation of the first communication device 410, and implements L2 layer functions for the user plane and the control plane. The controller/processor 459 is also responsible for HARQ operations, retransmission of lost packets, and signaling to the first communication device 410. The transmitting processor 468 performs modulation mapping and channel coding processing, and the multi-antenna transmitting processor 457 performs digital multi-antenna spatial precoding, including codebook-based precoding and non-codebook-based precoding, and beamforming processing. Then, the transmitting processor 468 modulates the generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides it to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/-processor 475 may be associated with the memory 476 that stores a program code and data. The memory 476 may be referred to as computer-readable media. The controller/processor 475 provides multiplexing, packet reassembly, decryption, header decompression, and control signal processing between transport and logical channels to recover upper layer data packets from the second communication device 450. The upper layer data packets from the controller/processor 475 can be provided to the core network. The controller/processor 475 is also responsible for error detection using the ACK and/or NACK protocol to support HARQ operations.

As one embodiment, the second communication device 450 comprises: at least one processor and at least one memory, the at least one memory including a computer program code; and the at least one memory and the computer program code are configured to be used together with the at least one processor. The second communication device 450 apparatus at least: receives a first CSI report configuration, the first CSI report configuration being used for configuring a first RS resource set, and the first RS resource set comprising at least one RS resource configured for at least one of channel measurement or interference measurement, wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission, or the execution is reception.

As one embodiment, the second communication device 450 comprises: a memory storing a computer-readable instruction program, the computer-readable instruction program generating an action when executed by at least one processor, and the action comprising: receiving a first CSI report configuration, the first CSI report configuration being used for configuring a first RS resource set, and the first RS resource set comprising at least one RS resource configured for at least one of channel measurement or interference measurement, wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission, or the execution is reception.

As one embodiment, the first communication device 410 comprises: at least one processor and at least one memory, the at least one memory including a computer program code; and the at least one memory and the computer program code are configured to be used together with the at least one processor. The first communication device 410 apparatus at least: transmits a first CSI report configuration, the first CSI report configuration being used for configuring a first RS resource set, and the first RS resource set comprising at least one RS resource configured for at least one of channel measurement or interference measurement, wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission, or the execution is reception.

As one embodiment, the first communication device 410 comprises: a memory storing a computer-readable instruction program, the computer-readable instruction program generating an action when executed by at least one processor, and the action comprising: transmitting a first CSI report configuration, the first CSI report configuration being used for configuring a first RS resource set, and the first RS resource set comprising at least one RS resource configured for at least one of channel measurement or interference measurement, wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission, or the execution is reception.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first CSI configuration information in the present application; and at least one of {the antenna 420, the transmitting device 418, the transmitting processor 416, the multi-antenna transmitting processor 471, the controller/-processor 475, and the memory 476} is used for transmitting the first CSI configuration information in the present application.

As one embodiment, at least one of {the antenna 452, the receiving device 454, the receiving processor 456, the multi-antenna receiving processor 458, the controller/processor 459, the memory 460, and the data source 467} is used for receiving the first RS resource set in the present application; and at least one of {the antenna 420, the transmitting device 418, the transmitting processor 416, the multi-antenna transmitting processor 471, the controller/processor 475, and the memory 476} is used for transmitting the first RS resource set in the present application.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for transmitting the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for transmitting the second information block in the present application.

As one embodiment, at least one of {the antenna 452, the transmitting device 454, the transmitting processor 468, the multi-antenna transmitting processor 457, the controller/processor 459, and the memory 460} is used for transmitting the first CSI report in the present application; and at least one of {the antenna 420, the receiving device 418, the receiving processor 470, the multi-antenna receiving processor 472, the controller/processor 475, and the memory 476} is used for receiving the first CSI report in the present application.

As one embodiment, at least one of {the antenna 452, the transmitting device 454, the transmitting processor 468, the multi-antenna transmitting processor 457, the controller/processor 459, and the memory 460} is used for the processing of the first CSI report in the present application.

As one embodiment, at least one of {the antenna 452, the transmitting device 454, the transmitting processor 468, the multi-antenna transmitting processor 457, the controller/processor 459, and the memory 460} is used for transmitting the first CSI report on the first physical layer channel in the present application.

As one embodiment, at least one of {the antenna 452, the transmitting device 454, the transmit processor 468, the multi-antenna transmitting processor 457, the controller/processor 459, and the memory 460} is used for abandoning transmitting the first CSI report on the first physical layer channel in the present application.

## **Embodiment 5**

Embodiment 5 illustrates a flowchart of wireless transmission according to one embodiment of the present application, as shown in FIG. 5. In FIG. 5, a first node U01 and a second node N02 are two communication nodes transmitted through an air interface respectively, wherein steps in blocks F1, F2 and F3 are optional.

For **the first node U01,** in step S5101, a first CSI report configuration is received; in step S5102, a first information block is received; in step S5103, the first CSI report is transmitted on the first physical layer channel; in step S5104, the first CSI report is abandoned from being transmitted on the first physical layer channel;

for **the second node N02,** in step S5201, a first CSI report configuration is transmitted; in step S5202, a first information block is transmitted; in step S5203, the first CSI report is received on the first physical layer channel; and in step S5204, the first CSI report is abandoned from being received on the first physical layer channel.

In Embodiment 5, the first CSI report configuration is used for configuring a first RS resource set, and the first RS resource set comprises at least one RS resource configured for at least one of channel measurement or interference measurement; the first physical layer channel is configured for the first CSI report, the first RS resource set comprises, in a time domain, some or all time domain resources in a first time window, and the processing for the first CSI report on the first physical layer channel depends on whether the first RS resource set is executed in the first time window or not; and the execution is transmission, or the execution is reception. The first information block is used for determining a first time unit set; whether the first RS resource set is executed in the first time window or not depends on whether time domain resources occupied by the first RS resource set in the first time window are orthogonal to the first time unit set; when the time domain resources occupied by the first RS resource set in the first time window are orthogonal to the first time unit set, the first RS resource set is executed in the first time window; and when the time domain resources occupied by the first RS resource set in the first time window belong to the first time unit set, the first RS resource set is not executed in the first time window.

As one embodiment, the processing for the first CSI report on the first physical layer channel comprises whether the first CSI report is transmitted on the first physical layer channel; when the first RS resource set is executed in the first time window, the first CSI report is transmitted on the first physical layer channel, block F2 exists, and block F3 does not exist; and when the first RS resource set is not executed in the first time window, the first CSI report is abandoned from being transmitted on the first physical layer channel, block F2 does not exist, and block F3 exists.

As one embodiment, block F2 exists, and block F3 does not exist; when the first RS resource set is executed in the first time window, the first RS resource set in the first time window is used for at least one of channel measurement or interference measurement for the first CSI report; and when the first RS resource set is not executed in the first time window, the first CSI report on the first physical layer channel is not updated.

As one embodiment, it comprises:
a first receiver for performing measurement in at least one RS resource in the first RS (Reference Signal) resource set.

As one embodiment, it comprises:
a first receiver for performing measurement on some or all of resources in the first RS resource set.

As one embodiment, it comprises:
a first receiver for performing measurement on some of resources in the first RS resource set.

As one embodiment, it comprises:
a first receiver for performing measurement on the first RS resource set.

As one embodiment, it comprises:

a first receiver for receiving a first information block, the first information block being used for determining a first time unit set,
the first receiver measuring the first RS resource set in a time domain resource outside the first time unit set.

As one embodiment, it comprises:
a second transmitter for transmitting at least one RS resource in the first RS resource set.

As one embodiment, it comprises:
a second transmitter for transmitting some or all of resources in the first RS resource set.

As one embodiment, it comprises:
a second transmitter for transmitting some of resources in the first RS resource set.

As one embodiment, it comprises:
a second transmitter for transmitting the first RS resource set.

As one embodiment, it comprises:

a second transmitter for transmitting a first information block, the first information block being used for determining a first time unit set,
the second transmitter transmitting the first RS resource set in a time domain resource outside the first time unit set.

As one embodiment, the first CSI report is calculated based on a PDSCH (Physical Downlink Shared Channel) on the CSI reference resource of the first CSI report.

As one embodiment, the CSI reference resource of the first CSI report is a frequency domain resource targeted by the first CSI report on a frequency domain.

As one embodiment, the CSI reference resource of the first CSI report is a subband or broadband targeted by the first CSI report on a frequency domain.

As one embodiment, the CSI reference resource of the first CSI report and a frequency domain resource targeted by the first CSI report belong to one identical BWP (Bandwidth Part) on a frequency domain.

As one embodiment, the CSI reference resource of the first CSI report is a first slot on a time domain, and the first slot depends on a slot occupied by the first physical layer channel.

As one embodiment, the description of the CSI reference resource of the first CSI report can refer to Section 5.2.2.5 of 3GPP TS38.214.

As one embodiment, a slot to which the first physical layer channel belongs is $n'$, the CSI reference resource of the first CSI report is a slot f($n'$) on a time domain, and the f($n'$) is one function.

As one embodiment, the o is an integer.

As one embodiment, the f($n'$) is $\left\lfloor n' \cdot \frac{2^{\mu_{DL}}}{2^{\mu_{UL}}} \right\rfloor + o$ , wherein $\mu_{DL}$ and $\mu_{UL}$ are downlink and uplink subcarrier spacings, respectively, and o is configurable, $\lfloor \rfloor$ indicating a round-down operation.

As one embodiment, the o is

$$\left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor - n_{CSI\_ref} - K_{offset} \cdot \frac{2^{\mu_{DL}}}{2^{\mu_{K_{offset}}}}$$ , wherein $K_{offset}$ is configured by a higher layer signaling, $n_{CSI\_ref}$ is not less than a minimum value of $4 \cdot 2^{\mu_{DL}\mu_{K_{offset}}}$, $N^{\mathrm{CA}}_{\mathrm{slot,\ offset}}$ and $\mu_{\mathrm{offset}}$ are also configured by a higher layer signaling. For detailed introduction, refer to Section 5.2.2.5 of 3GPP TS38.214.

As one embodiment, when the time domain resources occupied by the first RS resource set in the first time window comprise time domain resources belonging to the first time unit set and time domain resources orthogonal to the first time unit set, the first RS resource set is not executed in the first time window.

As one embodiment, when the time domain resources occupied by the first RS resource set in the first time window comprise time domain resources belonging to the first time unit set and time domain resources orthogonal to the first time unit set, the first RS resource set is executed in the first time window.

As one embodiment, the first information block is carried by a higher layer signaling.

As one embodiment, the first information block is carried by at least one of an RRC signaling, a MAC (Medium Access Control) layer signaling or a physical layer signaling.

As one embodiment, the first information block is carried by at least one of an RRC signaling or a MAC (Medium Access Control) layer signaling.

As one embodiment, the first information block is carried by at least one of an RRC signaling or a physical layer signaling.

As one embodiment, the first information block is carried by a MAC (Medium Access Control) layer signaling or a physical layer signaling.

As one embodiment, the first information block is carried by a MAC CE (Control Element).

As one embodiment, the first information block comprises a MAC PDU (Protocol Data Unit).

As one embodiment, the first information block comprises a MAC subheader.

As one embodiment, the first information block comprises a MAC CE.

As one embodiment, the first information block comprises a MAC PDU.

As one embodiment, the first information block comprises a MAC subheader.

As one embodiment, the first information block comprises DCI (Downlink Control Information).

As one embodiment, the first information block comprises SCI (Sidelink Control Information).

As one embodiment, the first information block comprises an SFI (Slot Format Indicator).

As one embodiment, the first information block is DCI.

As one embodiment, the first information block is SCI.

As one embodiment, the first information block is SFI.

As one embodiment, a physical layer channel occupied by the first information block comprises a PDCCH (Physical Downlink Control Channel).

As one embodiment, a physical layer channel occupied by the first information block comprises a PSCCH (Physical Sidelink Control Channel).

As one embodiment, a physical layer channel occupied by the first information block comprises a PHICH (Physical Hybrid ARQ Indicator Channel).

As one embodiment, a physical layer channel occupied by the first information block comprises a PCFICH (Physical Control Format Indication Channel).

As one embodiment, the first information block is carried by a cell-specific signaling.

As one embodiment, the first information block is carried by a cell-specific higher layer signaling.

As one embodiment, the first information block is carried by a cell-specific DCI signaling.

As one embodiment, the first information block is cell-specific.

As one embodiment, the first information block is carried by a UE-group common signaling.

As one embodiment, the first information block is carried by a UE-group common higher layer signaling.

As one embodiment, the first information block is UE-group common DCI.

As one embodiment, the first information block is UE-group common.

As one embodiment, the first information block is carried by a UE-specific signaling.

As one embodiment, the first information block is carried by a UE-specific higher layer signaling.

As one embodiment, the first information block is UE-specific DCI.

As one embodiment, the first information block is UE-specific.

As one embodiment, the first information block is used for indicating a first time unit set.

As one embodiment, the first information block is used for explicitly indicating the first time unit set.

As one embodiment, the first information block is used for implicitly indicating the first time unit set.

As one embodiment, the first information block is used for directly indicating the first time unit set.

As one embodiment, the first information block is used for indirectly indicating the first time unit set.

As one embodiment, the first information block is used for activating the first time unit set.

As one embodiment, the first information block is used for indicating the first time unit set.

As one embodiment, the first information block is used for indicating a second time unit set, and the first time unit set comprises at least one time unit outside the second time unit set.

As one sub-embodiment of the above embodiment, the first information block is used for explicitly indicating the second time unit set.

As one sub-embodiment of the above embodiment, the first information block is used for implicitly indicating the second time unit set.

As one sub-embodiment of the above embodiment, the first information block is used for directly indicating the second time unit set.

As one sub-embodiment of the above embodiment, the first information block is used for indirectly indicating the second time unit set.

As one embodiment, the first information block is used for indicating a third time unit set, and the first time unit set comprises at least one time unit outside the third time unit set.

As one sub-embodiment of the above embodiment, the first information block is used for explicitly indicating the third time unit set.

As one sub-embodiment of the above embodiment, the first information block is used for implicitly indicating the third time unit set.

As one sub-embodiment of the above embodiment, the first information block is used for directly indicating the third time unit set.

As one sub-embodiment of the above embodiment, the first information block is used for indirectly indicating the third time unit set.

As one sub-embodiment of the above embodiment, the first information block is used for activating a second time unit set, and the first time unit set comprises at least one time unit outside the second time unit set.

As one embodiment, the first information block is used for activating a third time unit set, and the first time unit set comprises at least one time unit outside the third time unit set.

As one embodiment, the first time unit set comprises at least one time unit.

As one sub-embodiment of this embodiment, the one time unit is one slot.

As one sub-embodiment of this embodiment, the one time unit is one subframe.

As one sub-embodiment of this embodiment, the one time unit comprises a positive integer number of consecutive symbols.

As one embodiment, the first time unit set comprises at least one time unit, and the at least one time unit is periodically distributed.

As one embodiment, the first time unit set comprises at least one time unit, and the at least one time unit is non-periodically distributed.

As one embodiment, the first information block is used for indicating at least one RS resource, and a time unit configured for any RS resource in the at least one RS resource belongs to the first time unit set.

As one sub-embodiment of this embodiment, the first information block is used for indicating multiple RS resources.

As one sub-embodiment of this embodiment, the first information block is used for indicating one RS resource.

As one sub-embodiment of this embodiment, the at least one RS resource comprises a CSI-RS (Channel State Information Reference Signal) resource.

As one sub-embodiment of this embodiment, the at least one RS resource comprises an SSB resource.

As one sub-embodiment of this embodiment, the at least one RS resource comprises an SS/PBCH block resource.

As one sub-embodiment of this embodiment, the at least one RS resource comprises at least one of a CSI-RS resource or an SSB resource.

As one sub-embodiment of this embodiment, the at least one RS resource comprises at least one of a CSI-RS resource or an SS/PBCH block resource.

As one sub-embodiment of this embodiment, the at least one RS resource is used for DTX (Discontinuous Transmission) of a cell.

As one sub-embodiment of this embodiment, the at least one RS resource is used for DTX of the second node.

As one sub-embodiment of this embodiment, the at least one RS resource is used in an energy-saving mode of the second node.

As one sub-embodiment of this embodiment, the at least one RS resource is used in an energy-saving mode of a cell.

As one embodiment, the first CSI report configuration is configured for a first cell, and the first time unit set is configured or indicated for discontinuous transmission (DTX) of the first cell.

As one embodiment, the first CSI report configuration is configured for a first cell, and the first time unit set comprises DTX inactive time of the first cell.

As one embodiment, the first CSI report configuration is configured for a first cell, and the first time unit set does not belong to DTX active time of the first cell.

As one embodiment, the first time unit set is configured or indicated for discontinuous transmission (DTX) of a cell.

As one embodiment, the first time unit set comprises DTX inactive time of a cell.

As one embodiment, the first time unit set does not belong to DTX active time of a cell.

As one embodiment, the second node maintains downlink transmission during DTX active time of a cell.

As one embodiment, the second node disenabled downlink transmission in DTX inactive time of a cell.

As one embodiment, the second node enters an energy saving mode in DTX inactive time of a cell.

As one embodiment, the downlink transmission comprises transmission of an SSB.

As one embodiment, the downlink transmission comprises transmission of an SS/PBCH block.

As one embodiment, the downlink transmission comprises transmission of a CSI-RS.

As one embodiment, the downlink transmission comprises dynamically scheduled downlink transmission.

As one embodiment, the downlink transmission comprises UE-specific downlink transmission.

As one embodiment, the downlink transmission comprises a dynamically scheduled PDSCH.

As one embodiment, the downlink transmission comprises a UE-specific PDSCH.

As one embodiment, the downlink transmission comprises transmission of at least one of SSB, CSI-RS, dynamically scheduled downlink transmission, UE-specific downlink transmission, dynamically scheduled PDSCH, or UE-specific PDSCH.

As one embodiment, a sender of the first information block comprises a second node, and the first information block is used for determining that the second node enters a first state.

As one sub-embodiment of this embodiment, a characteristic of the first state comprises that the second node stops data transmission based on dynamic scheduling.

As one sub-embodiment of this embodiment, a characteristic of the first state comprises that the second node transmits an SSB.

As one sub-embodiment of this embodiment, a characteristic of the first state comprises that the second node transmits a CSI-RS.

As one sub-embodiment of this embodiment, the first state comprises a DTX state.

As one sub-embodiment of this embodiment, the first state comprises an energy saving state.

As one embodiment, when the first physical layer channel comprises, in a time domain, time domain resources belonging to the second time unit set and time domain resources orthogonal to the second time unit set, the first RS resource set is not executed in a first time window.

As one embodiment, when the first physical layer channel comprises, in a time domain, time domain resources belonging to the second time unit set and time domain resources orthogonal to the second time unit set, the first RS resource set is executed in a first time window.

As one embodiment, the second time unit set is the first time unit set.

As one embodiment, the second time unit set overlaps with the first time unit set.

As one embodiment, the second time unit set is orthogonal to the first time unit set.

As one embodiment, the second time unit set and the first time unit set are configured separately.

As one embodiment, the second time unit set and the first time unit set are determined separately.

As one embodiment, when the first physical layer channel and the second time unit set are orthogonal in a time domain, and the time domain resources occupied by the first RS resource set in the first time window are orthogonal to the first time unit set, the first RS resource set is executed in the first time window.

As one embodiment, when the first physical layer channel belongs to the second time unit set in a time domain, and the time domain resources occupied by the first RS resource set in the first time window are orthogonal to the first time unit set, the first RS resource set is not executed in the first time window.

As one embodiment, when the first physical layer channel belongs to the second time unit set in a time domain, and the time domain resources occupied by the first RS resource set in the first time window belong to the first time unit set, the first RS resource set is not executed in the first time window.

As one embodiment, the first information block is used for determining the second time unit set.

As one embodiment, the second time unit set comprises at least one time unit outside the first time unit set.

As one embodiment, the first node device comprises:

the first receiver for receiving a second information block,
wherein the second information block is used for determining the second time unit set.

As one embodiment, a method in the first node comprises:

receiving a second information block,
wherein the second information block is used for determining the second time unit set.

As one embodiment, the second node device comprises:

a second transmitter for transmitting a second information block,
wherein the second information block is used for determining the second time unit set.

As one embodiment, a method in the second node comprises:

transmitting a second information block,
wherein the second information block is used for determining the second time unit set.

As one embodiment, the second information block is carried by a higher layer signaling.
As one embodiment, the second information block is carried by at least one of an RRC signaling, a MAC (Medium Access Control) layer signaling, or a physical layer signaling.
As one embodiment, the second information block is carried by at least one of an RRC signaling or a MAC (Medium Access Control) layer signaling.
As one embodiment, the second information block is carried by at least one of an RRC signaling or a physical layer signaling.
As one embodiment, the second information block is carried by a MAC (Medium Access Control) layer signaling or a physical layer signaling.
As one embodiment, the second information block is carried by a MAC CE (Control Element).
As one embodiment, the second information block comprises a MAC PDU (Protocol Data Unit).
As one embodiment, the second information block comprises a MAC subheader.
As one embodiment, the second information block comprises a MAC CE.
As one embodiment, the second information block comprises a MAC PDU.
As one embodiment, the second information block comprises a MAC subheader.
As one embodiment, the second information block comprises DCI (Downlink Control Information).
As one embodiment, the second information block comprises SCI (Sidelink Control Information).
As one embodiment, the second information block comprises an SFI (Slot Format Indicator).
As one embodiment, the second information block is DCI.
As one embodiment, the second information block is SCI.
As one embodiment, the second information block is SFI.
As one embodiment, a physical layer channel occupied by the second information block comprises a PDCCH (Physical Downlink Control Channel).
As one embodiment, a physical layer channel occupied by the second information block comprises a PSCCH (Physical Sidelink Control Channel).
As one embodiment, a physical layer channel occupied by the second information block comprises a PHICH (Physical Hybrid ARQ Indicator Channel).
As one embodiment, a physical layer channel occupied by the second information block comprises a PCFICH (Physical Control Format Indication Channel).
As one embodiment, the second information block is carried by a cell-specific signaling.
As one embodiment, the second information block is carried by a cell-specific higher layer signaling.
As one embodiment, the second information block is carried by a cell-specific DCI signaling.
As one embodiment, the second information block is cell-specific.
As one embodiment, the second information block is carried by a UE-group common signaling.
As one embodiment, the second information block is carried by a UE-group common higher layer signaling.
As one embodiment, the second information block is UE-group common DCI.
As one embodiment, the second information block is UE-group common.
As one embodiment, the second information block is carried by a UE-specific signaling.
As one embodiment, the second information block is carried by a UE-specific higher layer signaling.
As one embodiment, the second information block is UE-specific DCI.

As one embodiment, the second information block is UE-specific.

As one embodiment, the second information block is used for indicating a second time unit set.

As one embodiment, the second information block is used for explicitly indicating the second time unit set.

As one embodiment, the second information block is used for implicitly indicating the second time unit set.

As one embodiment, the second information block is used for directly indicating the second time unit set.

As one embodiment, the second information block is used for indirectly indicating the second time unit set.

As one embodiment, the second information block is used for activating the second time unit set.

As one embodiment, the second information block is used for indicating the second time unit set.

As one embodiment, the second information block is used for indicating a fourth time unit set, and the second time unit set comprises at least one time unit outside the fourth time unit set.

As one sub-embodiment of the above embodiment, the second information block is used for explicitly indicating the fourth time unit set.

As one sub-embodiment of the above embodiment, the second information block is used for implicitly indicating the fourth time unit set.

As one sub-embodiment of the above embodiment, the second information block is used for directly indicating the fourth time unit set.

As one sub-embodiment of the above embodiment, the second information block is used for indirectly indicating the fourth time unit set.

As one embodiment, the second information block is used for activating the fourth time unit set, and the second time unit set comprises at least one time unit outside the fourth time unit set.

As one embodiment, the second time unit set comprises at least one time unit.

As one sub-embodiment of this embodiment, the one time unit is one slot.

As one sub-embodiment of this embodiment, the one time unit is one subframe.

As one sub-embodiment of this embodiment, the one time unit comprises a positive integer number of consecutive symbols.

As one embodiment, the second time unit set comprises at least one time unit, and the at least one time unit is periodically distributed.

As one embodiment, the second time unit set comprises at least one time unit, and the at least one time unit is non-periodically distributed.

As one embodiment, the second information block is used for indicating at least one RS resource, and a time unit configured for any RS resource in the at least one RS resource belongs to the second time unit set.

As one sub-embodiment of this embodiment, the second information block is used for indicating multiple RS resources.

As one sub-embodiment of this embodiment, the second information block is used for indicating one RS resource.

As one sub-embodiment of this embodiment, the at least one RS resource comprises an SRS resource.

As one sub-embodiment of this embodiment, the at least one RS resource comprises a CSI-RS (Channel State Information Reference Signal) resource.

As one sub-embodiment of this embodiment, the at least one RS resource comprises an SSB resource.

As one sub-embodiment of this embodiment, the at least one RS resource comprises an SS/PBCH block resource.

As one sub-embodiment of this embodiment, the at least one RS resource comprises at least one of a CSI-RS resource or an SSB resource.

As one sub-embodiment of this embodiment, the at least one RS resource comprises at least one of a CSI-RS resource or an SS/PBCH block resource.

As one sub-embodiment of this embodiment, the at least one RS resource is used for DRX (Discontinuous Reception) of a cell.

As one sub-embodiment of this embodiment, the at least one RS resource is used for DRX of the second node.

As one sub-embodiment of this embodiment, the at least one RS resource is used in an energy-saving mode of the second node.

As one sub-embodiment of this embodiment, the at least one RS resource is used in an energy-saving mode of a cell.

As one embodiment, the first CSI report configuration is configured for a first cell, and the second time unit set is configured or indicated for DRX of the first cell.

As one embodiment, the first CSI report configuration is configured for a first cell, and the second time unit set comprises DRX inactive time of the first cell.

As one embodiment, the first CSI report configuration is configured for a first cell, and the second time unit set does not belong to DRX active time of the first cell.

As one embodiment, the second time unit set is configured or indicated for DRX of a cell.

As one embodiment, the second time unit set comprises DRX inactive time of a cell.

As one embodiment, the second time unit set does not belong to DRX active time of a cell.

As one embodiment, the second node maintains uplink reception in DRX active time of a cell.

As one embodiment, the second node receives uplink signals in DRX active time of a cell.

As one embodiment, the second node supports uplink reception in DRX active time of a cell.

As one embodiment, the second node turns off uplink reception in DRX inactive time of a cell.

As one embodiment, the second node does not support uplink reception in DRX inactive time of a cell.

As one embodiment, the second node enters an energy saving mode in DRX inactive time of a cell.

As one embodiment, the first node supports transmission of uplink signals in DRX active time of a cell.

As one embodiment, the first node does not transmit uplink signals in DRX inactive time of a cell.

As one embodiment, the first node considers that the second node receives uplink signals in DRX active time of a cell.

As one embodiment, the first node considers that the second node processes uplink signals in DRX active time of a cell.

As one embodiment, the first node considers that the second node does not receive an uplink signal in DRX inactive time of a cell.

As one embodiment, the first node considers that the second node does not process an uplink signal in DRX inactive time of a cell.

As one embodiment, the uplink reception comprises reception of an uplink RS.

As one embodiment, the uplink reception comprises reception of an SRS.

As one embodiment, the uplink reception comprises reception of a dynamically scheduled uplink signal.

As one embodiment, the uplink reception comprises reception of a UE-specific uplink signal.

As one embodiment, the uplink reception comprises reception of a dynamically scheduled PUSCH.

As one embodiment, the uplink reception comprises reception of a UE-specific PUSCH.

As one embodiment, the uplink reception comprises reception of at least one of SRS, dynamically scheduled uplink transmission, UE-specific uplink transmission, dynamically scheduled PUSCH, or UE-specific PUSCH.

As one embodiment, the uplink signal comprises an uplink RS.

As one embodiment, the uplink signal comprises an SRS.

As one embodiment, the uplink signal comprises dynamically scheduled uplink transmission.

As one embodiment, the uplink signal comprises UE-specific uplink transmission.

As one embodiment, the uplink signal comprises a dynamically scheduled PUSCH.

As one embodiment, the uplink signal comprises a UE-specific PUSCH.

As one embodiment, the uplink signal comprises at least one of SRS, dynamically scheduled uplink transmission, UE-specific uplink transmission, dynamically scheduled PUSCH, or UE-specific PUSCH.

As one embodiment, a sender of the second information block comprises a second node, and the second information block is used for determining that the second node enters a second state.

As one sub-embodiment of this embodiment, a characteristic of the second state comprises that the second node stops data transmission based on dynamic scheduling.

As one sub-embodiment of this embodiment, a characteristic of the second state comprises that the second node transmits an SRS.

As one sub-embodiment of this embodiment, a characteristic of the second state comprises that the second node transmits an uplink RS.

As one sub-embodiment of this embodiment, the second state comprises a DRX state.

As one sub-embodiment of this embodiment, the second state comprises an energy saving state.

## Embodiment 6

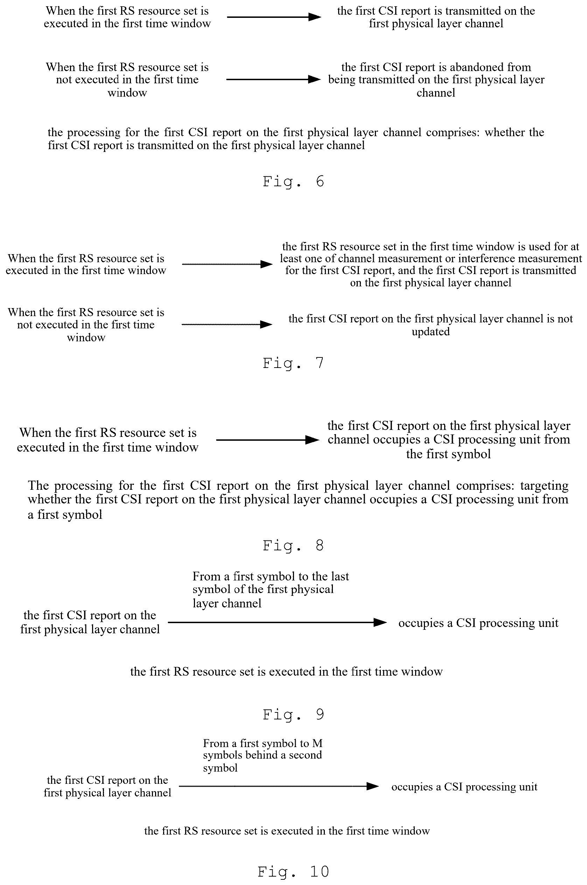

Embodiment 6 illustrates a schematic diagram of the processing for the first CSI report on the first physical layer channel according to one embodiment of the present application, as shown in FIG. 6.

In Embodiment 6, the processing for the first CSI report on the first physical layer channel comprises whether the first CSI report is transmitted on the first physical layer channel; when the first RS resource set is executed in the first time window, the first CSI report is transmitted on the first physical layer channel; and when the first RS resource set is not executed in the first time window, the first CSI report is abandoned from being transmitted on the first physical layer channel.

As one embodiment, when the first RS resource set is executed in the first time window, the first RS resource set in the first time window is used for at least one of channel measurement or interference measurement for the first CSI report, and the first CSI report is transmitted on the first physical layer channel; and when the first RS resource set is not executed

22

in the first time window, the first CSI report is abandoned from being transmitted on the first physical layer channel.

**Embodiment 7**

Embodiment 7 illustrates a schematic diagram of the processing for the first CSI report on the first physical layer channel according to another embodiment of the present application, as shown in FIG. 7.

In Embodiment 7, when the first RS resource set is executed in the first time window, the first RS resource set in the first time window is used for at least one of channel measurement or interference measurement for the first CSI report, and the first CSI report is transmitted on the first physical layer channel; and when the first RS resource set is not executed in the first time window, the first CSI report on the first physical layer channel is not updated.

As one embodiment, the processing for the first CSI report on the first physical layer channel comprises whether the first CSI report on the first physical layer channel is updated.

As one embodiment, only when the first RS resource set is not executed in the first time window, the first CSI report on the first physical layer channel is not updated.

As one embodiment, the processing for the first CSI report on the first physical layer channel comprises whether the first CSI report on the first physical layer channel is updated; when the first RS resource set is executed in the first time window, the first CSI report on the first physical layer channel is updated, and the first RS resource set in the first time window is used for at least one of channel measurement or interference measurement for the first CSI report; and when the first RS resource set is not executed in the first time window, the first CSI report on the first physical layer channel is not updated.

As one embodiment, the first RS resource set in the first time window comprises a first occasion set of the first RS resource set, and the first occasion set comprises the latest RS occasion of each RS resource in the first RS resource set that is not later than a CSI reference resource of the first CSI report.

As one embodiment, when the first RS resource set is executed in the first time window, a first occasion set of the first RS resource set is used for at least one of channel measurement or interference measurement for the first CSI report, and the first occasion set comprises the latest RS occasion of each RS resource in the first RS resource set that is not later than a CSI reference resource of the first CSI report.

As one embodiment, the first RS resource set in the first time window comprises an RS occasion of each RS resource in the first RS resource set in the first time window.

As one embodiment, the first RS resource set in the first time window comprises an RS occasion of at least one RS resource in the first RS resource set in the first time window.

As one embodiment, the first RS resource set in the first time window comprises an RS occasion of the first RS resource set in the first time window.

As one embodiment, the meaning of "the first CSI report on the first physical layer channel is updated" comprises: the first CSI report on the first physical layer channel depends on measurement for the first RS resource set in the first time window.

As one embodiment, the meaning of "the first CSI report on the first physical layer channel is updated" comprises: determination of the first CSI report on the first physical layer channel depends on measurement for the first RS resource set in the first time window.

As one embodiment, the meaning of "the first CSI report on the first physical layer channel is updated" comprises: calculation of the first CSI report on the first physical layer channel depends on measurement for the first RS resource set in the first time window.

As one embodiment, the meaning of "the first CSI report on the first physical layer channel is updated" comprises: the first RS resource set in the first time window is used for at least one of channel measurement or interference measurement for the first CSI report.

As one embodiment, the meaning of "the first CSI report on the first physical layer channel is not updated" comprises: the first node is not expected to update the first CSI report on the first physical layer channel.

As one embodiment, the meaning of "the first CSI report on the first physical layer channel is not updated" comprises: the first CSI report on the first physical layer channel is a default value.

As one embodiment, the meaning of "the first CSI report on the first physical layer channel is not updated" comprises: the first CSI report on the first physical layer channel is a fixed value.

As one embodiment, the meaning of "the first CSI report on the first physical layer channel is not updated" comprises: the first CSI report on the first physical layer channel is independent of the first RS resource set in the first time window.

As one embodiment, the meaning of "the first CSI report on the first physical layer channel is not updated" comprises: the first CSI report on the first physical layer channel is not related to the first RS resource set in the first time window.

As one embodiment, the meaning of "the first CSI report on the first physical layer channel is not updated" comprises: the first CSI report on the first physical layer channel is the same as the latest report earlier than the first physical layer channel.

As one embodiment, the meaning of "the first CSI report on the first physical layer channel is not updated" comprises: the first CSI report on the first physical layer channel is the same as a CSI report in the latest report cycle earlier than the first physical layer channel.

As one embodiment, the first CSI report on the first physical layer channel is a CSI report of a periodic CSI report in one report cycle, and the meaning of "the first CSI report on the first physical layer channel is not updated" comprises: the first CSI report on the first physical layer channel is the same as a CSI report in the latest report cycle earlier than the first physical layer channel.

As one embodiment, the first CSI report on the first physical layer channel is a CSI report of a semi-continuous CSI report in one report cycle, and the meaning of "the first CSI report on the first physical layer channel is not updated" comprises: the first CSI report on the first physical layer channel is the same as a CSI report in the latest report cycle earlier than the first physical layer channel.

## Embodiment 8

Embodiment 8 illustrates a schematic diagram of the processing for the first CSI report on the first physical layer channel according to another embodiment of the present application, as shown in FIG. 8.

In Embodiment 8, the processing for the first CSI report on the first physical layer channel comprises: targeting whether the first CSI report on the first physical layer channel occupies a CSI processing unit from a first symbol; and when the first RS resource set is executed in the first time window, the first CSI report on the first physical layer channel occupies a CSI processing unit from the first symbol.

As one embodiment, the first symbol is a first symbol of the earliest RS resource of the first RS resource set in a first occasion set, or the first symbol is a first symbol of the earliest RS occasion in the first occasion set; and the first occasion set comprises the latest RS occasion of each RS resource in the first RS resource set that is not later than a CSI reference resource of the first CSI report.

As one embodiment, the first symbol is a first symbol of the earliest RS resource of the first RS resource set in the first occasion set; and the first occasion set comprises the latest RS occasion of each RS resource in the first RS resource set that is not later than a CSI reference resource of the first CSI report.

As one embodiment, the first symbol is a first symbol of the earliest RS occasion in the first occasion set; and the first occasion set comprises the latest RS occasion of each RS resource in the first RS resource set that is not later than a CSI reference resource of the first CSI report.

Typically, "first" means: earliest.

Typically, "latest" means: latest.

As one embodiment, the first symbol is a start symbol of the first time window.

As one embodiment, the first symbol belongs to the first time window.

As one embodiment, when the first RS resource set is not executed in a first time window, the first CSI report on the first physical layer channel does not occupy the CSI processing unit (CPU) starting from the first symbol.

As one embodiment, when the first RS resource set is not executed in a first time window, the first CSI report on the first physical layer channel occupies the CSI processing unit starting from a third symbol, and the third symbol is different from the first symbol.

As one embodiment, when the first RS resource set is not executed in a first time window, the first CSI report on the first physical layer channel does not occupy the CSI processing unit.

## Embodiment 9

Embodiment 9 illustrates a schematic diagram of occupation of a CSI processing unit according to one embodiment of the present application, as shown in FIG. 9.

In Embodiment 9, the first RS resource set is executed in the first time window, and the first CSI report on the first physical layer channel occupies the CSI processing unit from a first symbol to the last symbol of the first physical layer channel.

As one embodiment, when the first RS resource set is executed in the first time window, the first CSI report on the first physical layer channel occupies the CSI processing unit from the first symbol to the last symbol of the first physical layer channel.

As one embodiment, when the first RS resource set is executed in the first time window, and the first CSI report does not comprise L1-RSRP, the first CSI report on the first physical layer channel occupies the CSI processing unit from the first symbol to the last symbol of the first physical layer channel.

Typically, the first physical layer channel occupies one or more symbols in a time domain, and "the last symbol of the first physical layer channel" is the last symbol of the one or more symbols occupied by the first physical layer channel.

As one embodiment, the first physical layer channel occupies one symbol in a time domain, and "the last symbol of the first physical layer channel" is the one symbol occupied by the first physical layer channel.

As one embodiment, the first physical layer channel occupies multiple symbols in a time domain, and "the last symbol of the first physical layer channel" is the last symbol of the multiple symbols occupied by the first physical layer channel.

As one embodiment, the CSI processing unit is used for processing a CSI report.

As one embodiment, the CSI processing unit is used by the first node for processing a CSI report.

As one embodiment, the CSI processing unit is used for calculating CSI.

As one embodiment, the CSI processing unit is used by the first node for calculating CSI.

## Embodiment 10

Embodiment 10 illustrates a schematic diagram of occupation of a CSI processing unit according to another embodiment of the present application, as shown in FIG. 10.

In Embodiment 10, the first RS resource set is executed in a first time window, and the first CSI report on the first physical layer channel occupies a CSI processing unit from a first symbol to M symbols after a second symbol, the M being a positive integer.

As one embodiment, when the first RS resource set is executed in the first time window, and the first CSI report comprises L1-RSRP, the first CSI report on the first physical layer channel occupies the CSI processing unit from the first symbol to M symbols after the second symbol, the M being a positive integer.

As one embodiment, the first symbol is the first symbol of the earliest RS resource of the first RS resource set in a first occasion set, and the second symbol is the last symbol of the latest RS resource of the first RS resource set in the first occasion set; and the first occasion set comprises the latest RS occasion of each RS resource in the first RS resource set that is not later than a CSI reference resource of the first CSI report.

As one embodiment, the first symbol is a first symbol of the earliest RS occasion in the first occasion set, and the second symbol is the last symbol of the latest RS occasion in the first occasion set; and the first occasion set comprises the latest RS occasion of each RS resource in the first RS resource set that is not later than a CSI reference resource of the first CSI report.

## Embodiments 11A-11B

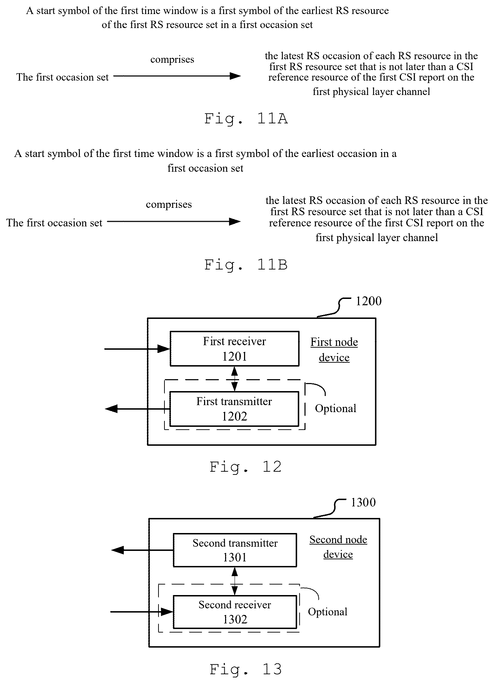

Embodiments 11A-11B respectively illustrate schematic diagrams of a first time window according to one embodiment of the present application, as shown in FIGS. 11A-11B.

In Embodiment 11A, a start symbol of the first time window is a first symbol of the earliest RS resource of the first RS resource set in a first occasion set; and the first occasion set comprises the latest RS occasion of each RS resource in the first RS resource set that is not later than a CSI reference resource of the first CSI report on the first physical layer channel.

In Embodiment 11B, the start symbol of the first time window is a first symbol of the earliest RS occasion in a first occasion set; and the first occasion set comprises the latest RS occasion of each RS resource in the first RS resource set that is not later than a CSI reference resource of the first CSI report on the first physical layer channel.

As one embodiment, the first time window comprises a first occasion set, and the first occasion set comprises the latest RS occasion of each RS resource in the first RS resource set that is not later than a CSI reference resource of the first CSI report on the first physical layer channel.

As one embodiment, the last symbol of the first time window is not later than a CSI reference resource of the first CSI report on the first physical layer channel.

As one embodiment, the last symbol of the first time window is earlier than a start symbol of the first physical layer channel.

Typically, "last symbol" refers to: the latest symbol.

As one embodiment, the first occasion set comprises at least one of a CSI-RS (Channel Status Information Reference Signal) occasion, a CSI-IM (Channel State Information - Interference Measurement) occasion, or an SSB (SS/PBCH block) occasion.

As one embodiment, the first occasion set comprises at least one of the latest CSI-RS occasion, the latest CSI-IM occasion, or the latest SSB occasion not later than a CSI reference resource of the first CSI report.

## Embodiment 12

Embodiment 12 illustrates a structural block diagram of a processing device used in a first node device according to one embodiment of the present application, as shown in FIG. 12. In FIG. 12, a processing device 1200 in the first node device comprises at least a first receiver 1201 in the first receiver 1201 or a first transmitter 1202.

As one embodiment, the processing device 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1202 comprises at least one of {an antenna 452, a transmitting device 454, a transmitting processor 468, a multi-antenna transmitting processor 457, a controller/processor 459, a memory 460, and a data source 467} in Embodiment 4.

The first receiver 1201 receives a first CSI report configuration, the first CSI report configuration being used for configuring a first RS resource set, and the first RS resource set comprising at least one RS resource configured for at least one of channel measurement or interference measurement;

in Embodiment 12, a first physical layer channel is configured for the first CSI report, the first RS resource set comprises some or all of time domain resources in a first time window in a time domain, and the processing for the first CSI report on the first physical layer channel depends on whether the first RS resource set is executed in the first time window or not; and the execution is transmission, or the execution is reception.

As one embodiment, it comprises:

a first transmitter 1202 for transmitting the first CSI report on the first physical layer channel, or abandoning transmitting the first CSI report on the first physical layer channel,
wherein the processing for the first CSI report on the first physical layer channel comprises whether the first CSI report is transmitted on the first physical layer channel; when the first RS resource set is executed in the first time window, the first CSI report is transmitted on the first physical layer channel; and when the first RS resource set is not executed in the first time window, the first CSI report is abandoned from being transmitted on the first physical layer channel.

As one embodiment, it comprises:

a first transmitter 1202 for transmitting the first CSI report on the first physical layer channel,
wherein when the first RS resource set is executed in the first time window, the first RS resource set in the first time window is used for at least one of channel measurement or interference measurement for the first CSI report; and when the first RS resource set is not executed in the first time window, the first CSI report on the first physical layer channel is not updated.

As one embodiment, the processing for the first CSI report on the first physical layer channel comprises targeting whether the first CSI report on the first physical layer channel occupies a CSI processing unit from a first symbol; and when the first RS resource set is executed in the first time window, the first CSI report on the first physical layer channel occupies a CSI processing unit from the first symbol.

As one embodiment, the first RS resource set is executed in the first time window, and the first CSI report on the first physical layer channel occupies a CSI processing unit from a first symbol to the last symbol of the first physical layer channel.

As one embodiment, a start symbol of the first time window is a first symbol of the earliest RS resource of the first RS resource set in the first occasion set, or the start symbol of the first time window is a first symbol of the earliest RS occasion in a first occasion set; and the first occasion set comprises the latest RS occasion of each RS resource in the first RS resource set that is not later than a CSI reference resource of the first CSI report on the first physical layer channel.

As one embodiment, it comprises:

the first receiver 1201 for receiving a first information block,
wherein the first information block is used for determining a first time unit set; whether the first RS resource set is executed in the first time window or not depends on whether time domain resources occupied by the first RS resource set in the first time window are orthogonal to the first time unit set; when the time domain resources occupied by the first RS resource set in the first time window are orthogonal to the first time unit set, the first RS resource set is executed in the first time window; and when the time domain resources occupied by the first RS resource set in the first time window belong to the first time unit set, the first RS resource set is not executed in the first time window.

As one embodiment, whether the first RS resource set is executed in the first time window or not depends on whether the first physical layer channel and the second time unit set are orthogonal in a time domain; when the first physical layer channel and the second time unit set are orthogonal in the time domain, the first RS resource set is executed in the first time window; and when the first physical layer channel belongs to the second time unit set in the time domain, the first RS resource set is not executed in the first time window.

## Embodiment 13

Embodiment 13 illustrates a structural block diagram of a processing device used in a second node device according to one embodiment of the present application, as shown in FIG. 13. In FIG. 13, a processing device 1300 in the second node device comprises at least a second transmitter 1301 in the second transmitter 1301 or the second receiver 1302.

As one embodiment, the processing device 1300 in the second node device comprises a second transmitter 1301 and a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1302 comprises at least one of {an antenna 420, a receiving device 418, a receiving processor 470, a multi-antenna receiving processor 472, a controller/processor 475, and a memory 476} in Embodiment 4.

The second transmitter 1301 transmits a first CSI report configuration, the first CSI report configuration being used for configuring a first RS resource set, and the first RS resource set comprising at least one RS resource configured for at least one of channel measurement or interference measurement;

in Embodiment 13, a first physical layer channel is configured for the first CSI report, the first RS resource set comprises some or all of time domain resources in a first time window in a time domain, and the processing for the first CSI report on the first physical layer channel depends on whether the first RS resource set is executed in the first time window or not; and the execution is transmission, or the execution is reception.

As one embodiment, it comprises:

a second receiver 1302 for receiving the first CSI report on the first physical layer channel, or abandoning receiving the first CSI report on the first physical layer channel,

wherein the processing for the first CSI report on the first physical layer channel comprises whether the first CSI report is transmitted on the first physical layer channel; when the first RS resource set is executed in the first time window, the first CSI report is transmitted on the first physical layer channel; and when the first RS resource set is not executed in the first time window, the first CSI report is abandoned from being transmitted on the first physical layer channel.

As one embodiment, it comprises:

a second receiver 1302 for receiving the first CSI report on the first physical layer channel,

wherein when the first RS resource set is executed in the first time window, the first RS resource set in the first time window is used for at least one of channel measurement or interference measurement for the first CSI report; and when the first RS resource set is not executed in the first time window, the first CSI report on the first physical layer channel is not updated.

As one embodiment, the processing for the first CSI report on the first physical layer channel comprises targeting whether the first CSI report on the first physical layer channel occupies a CSI processing unit from a first symbol; and when the first RS resource set is executed in the first time window, the first CSI report on the first physical layer channel occupies a CSI processing unit from the first symbol.

As one embodiment, the first RS resource set is executed in the first time window, and the first CSI report on the first physical layer channel occupies a CSI processing unit from a first symbol to the last symbol of the first physical layer channel.

As one embodiment, a start symbol of the first time window is a first symbol of the earliest RS resource of the first RS resource set in the first occasion set, or the start symbol of the first time window is a first symbol of the earliest RS occasion in a first occasion set; and the first occasion set comprises the latest RS occasion of each RS resource in the first RS resource set that is not later than a CSI reference resource of the first CSI report on the first physical layer channel.

As one embodiment, it comprises:

the second transmitter 1301 for transmitting a first information block,

wherein the first information block is used for determining a first time unit set; whether the first RS resource set is executed in the first time window or not depends on whether time domain resources occupied by the first RS resource set in the first time window are orthogonal to the first time unit set; when the time domain resources occupied by the first RS resource set in the first time window are orthogonal to the first time unit set, the first RS resource set is executed in the first time window; and when the time domain resources occupied by the first RS resource set in the first time window belong to the first time unit set, the first RS resource set is not executed in the first time window.

As one embodiment, whether the first RS resource set is executed in the first time window or not depends on whether the first physical layer channel and the second time unit set are orthogonal in a time domain; when the first physical layer channel and the second time unit set are orthogonal in the time domain, the first RS resource set is executed in the first time window; and when the first physical layer channel belongs to the second time unit set in the time domain, the first RS resource set is not executed in the first time window.

Those ordinarily skilled in the art can understand that all or some of the steps in the above method can be completed by instructing relevant hardware through a program, and the program can be stored in a computer-readable storage medium, such as a read-only memory, a hard disk or an optical disk, etc. Optionally, all or some of the steps in the above embodiment can also be implemented using one or more integrated circuits. Accordingly, each module unit in the above embodiment can be implemented in the form of hardware or in the form of a software function module. The present application is not limited to any specific form of software and hardware combination. The user equipment, terminal and UE in the present application include but are not limited to drones, communication modules on drones, remote-controlled aircrafts, aircrafts, small aircrafts, mobile phones, tablet computers, notebook computers, vehicle-mounted communication devices, wireless sensors, network access cards, Internet of Things terminals, RFID terminals, NB-IOT terminals, MTC (Machine Type Communication) terminals, eMTC (enhanced MTC) terminals, data cards, network access cards, vehicle-mounted communication devices, low-cost mobile phones, low-cost tablet computers and other wireless communication devices. The base station or system equipment in the present application includes but is not limited to macrocellular base stations, microcellular base stations, home base stations, relay base stations, gNB (NR node B) NR node B, TRPs (Transmitter Receiver Points) and other wireless communication devices.

The above is only preferred embodiments of the present application and is not intended to limit the scope of protection of the present application. Any changes and modifications made based on the embodiments described in the specification, if similar partial or full technical effects can be obtained, should be deemed obvious and belong to the scope of protection of the present invention.

**Claims**

1. A first node device for wireless communication, comprising:

   a first receiver for receiving a first CSI report configuration, the first CSI report configuration being used for configuring a first RS resource set, and the first RS resource set comprising at least one RS resource configured for at least one of channel measurement or interference measurement,
   wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission, or the execution is reception.

2. The first node device according to claim 1, comprising:

   a first transmitter for transmitting the first CSI report on the first physical layer channel, or abandoning transmitting the first CSI report on the first physical layer channel,
   wherein the processing for the first CSI report on the first physical layer channel comprises whether the first CSI report is transmitted on the first physical layer channel; when the first RS resource set is executed in the first time window, the first CSI report is transmitted on the first physical layer channel; and when the first RS resource set is not executed in the first time window, the first CSI report is abandoned from being transmitted on the first physical layer channel.

3. The first node device according to claim 1, comprising:

   a first transmitter for transmitting the first CSI report on the first physical layer channel,

wherein when the first RS resource set is executed in the first time window, the first RS resource set in the first time window is used for at least one of channel measurement or interference measurement for the first CSI report; and when the first RS resource set is not executed in the first time window, the first CSI report on the first physical layer channel is not updated.

4. The first node device according to any one of claims 1 to 3, wherein the processing for the first CSI report on the first physical layer channel comprises whether the first CSI report on the first physical layer channel occupies a CSI processing unit from a first symbol; and when the first RS resource set is executed in the first time window, the first CSI report on the first physical layer channel occupies the CSI processing unit from the first symbol.

5. The first node device according to any one of claims 1 to 4, wherein the first RS resource set is executed in the first time window, and the first CSI report on the first physical layer channel occupies the CSI processing unit from the first symbol until the last symbol of the first physical layer channel.

6. The first node device according to any one of claims 1 to 5, wherein a start symbol of the first time window is the first symbol of the earliest RS resource of the first RS resource set in the first occasion set, or the start symbol of the first time window is the first symbol of the earliest RS occasion in a first occasion set; and the first occasion set comprises the latest RS occasion of each RS resource in the first RS resource set that is not later than a CSI reference resource of the first CSI report on the first physical layer channel.

7. The first node device according to any one of claims 1 to 6, comprising:

   a first receiver for receiving a first information block,
   wherein the first information block is used for determining a first time unit set; whether the first RS resource set is executed in the first time window or not depends on whether time domain resources occupied by the first RS resource set in the first time window are orthogonal to the first time unit set; when the time domain resource occupied by the first RS resource set in the first time window is orthogonal to the first time unit set, the first RS resource set is executed in a first time window; and when the time domain resource occupied by the first RS resource set in the first time window belongs to the first time unit set, the first RS resource set is not executed in the first time window.

8. A second node device for wireless communication, comprising:

   a second transmitter for transmitting a first CSI report configuration, the first CSI report configuration being used for configuring a first RS resource set, and the first RS resource set comprising at least one RS resource configured for at least one of channel measurement or interference measurement,
   wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission, or the execution is reception.

9. The second node device according to claim 8, comprising:

   a second receiver for receiving the first CSI report on the first physical layer channel, or abandoning receiving the first CSI report on the first physical layer channel,
   wherein the processing for the first CSI report on the first physical layer channel comprises whether the first CSI report is transmitted on the first physical layer channel; when the first RS resource set is executed in the first time window, the first CSI report is transmitted on the first physical layer channel; and when the first RS resource set is not executed in the first time window, the first CSI report is abandoned from being transmitted on the first physical layer channel.

10. The second node device according to claim 8, comprising:

    a second receiver for receiving the first CSI report on the first physical layer channel,
    wherein when the first RS resource set is executed in the first time window, the first RS resource set in the first time window is used for at least one of channel measurement or interference measurement for the first CSI report; and when the first RS resource set is not executed in the first time window, the first CSI report on the first physical layer channel is not updated.

11. The second node device according to any one of claims 8 to 10, comprising:
the processing for the first CSI report on the first physical layer channel comprising whether the first CSI report on the first physical layer channel occupies a CSI processing unit from a first symbol; and when the first RS resource set is executed in the first time window, the first CSI report on the first physical layer channel occupies the CSI processing unit from the first symbol.

12. The second node device according to any one of claims 8 to 11, comprising:
when the first RS resource set is executed in the first time window, the first CSI report on the first physical layer channel occupies the CSI processing unit from the first symbol until the last symbol of the first physical layer channel.

13. The second node device according to any one of claims 8 to 12, comprising:
a start symbol of the first time window being the first symbol of the earliest RS resource of the first RS resource set in the first occasion set, or the start symbol of the first time window being the first symbol of the earliest RS occasion in a first occasion set; and the first occasion set comprises the latest RS occasion of each RS resource in the first RS resource set that is not later than a CSI reference resource of the first CSI report on the first physical layer channel.

14. The second node device according to claim 13, comprising:

a second transmitter for transmitting a first information block,
wherein the first information block is used for determining a first time unit set; whether the first RS resource set is executed in the first time window or not depends on whether time domain resources occupied by the first RS resource set in the first time window are orthogonal to the first time unit set; when the time domain resource occupied by the first RS resource set in the first time window is orthogonal to the first time unit set, the first RS resource set is executed in a first time window; and when the time domain resource occupied by the first RS resource set in the first time window belongs to the first time unit set, the first RS resource set is not executed in the first time window.

15. The second node device according to claim 13 or 14, comprising:
whether the first RS resource set is executed in the first time window depends on whether the first physical layer channel and a second time unit set are orthogonal in a time domain; when the first physical layer channel and the second time unit set are orthogonal in the time domain, the first RS resource set is executed in the first time window; and when the first physical layer channel belongs to the second time unit set in the time domain, the first RS resource set is not executed in the first time window.

16. A method used in a first node device for wireless communication, comprising:

receiving a first CSI report configuration, the first CSI report configuration being used for configuring a first RS resource set, and the first RS resource set comprising at least one RS resource configured for at least one of channel measurement or interference measurement,
wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission, or the execution is reception.

17. The method used in the first node device according to claim 16, comprising:

transmitting the first CSI report on the first physical layer channel, or abandoning transmitting the first CSI report on the first physical layer channel,
wherein the processing for the first CSI report on the first physical layer channel comprises whether the first CSI report is transmitted on the first physical layer channel; when the first RS resource set is executed in the first time window, the first CSI report is transmitted on the first physical layer channel; and when the first RS resource set is not executed in the first time window, the first CSI report is abandoned from being transmitted on the first physical layer channel.

18. The method used in the first node device according to claim 16, comprising:

transmitting the first CSI report on the first physical layer channel,
wherein when the first RS resource set is executed in the first time window, the first RS resource set in the first time window is used for at least one of channel measurement or interference measurement for the first CSI report; and when the first RS resource set is not executed in the first time window, the first CSI report on the first physical layer channel is not updated.

19. The method used in the first node device according to any one of claim 16 to 18, comprising:
the processing for the first CSI report on the first physical layer channel comprising whether the first CSI report on the first physical layer channel occupies a CSI processing unit from a first symbol; and when the first RS resource set is executed in the first time window, the first CSI report on the first physical layer channel occupies the CSI processing unit from the first symbol.

20. The method used in the first node device according to any one of claim 16 to 19, comprising:
when the first RS resource set is executed in the first time window, the first CSI report on the first physical layer channel occupies the CSI processing unit from the first symbol until the last symbol of the first physical layer channel.

21. The method used in the first node device according to any one of claim 16 to 20, comprising:
a start symbol of the first time window being the first symbol of the earliest RS resource of the first RS resource set in the first occasion set, or the start symbol of the first time window being the first symbol of the earliest RS occasion in a first occasion set; and the first occasion set comprises the latest RS occasion of each RS resource in the first RS resource set that is not later than a CSI reference resource of the first CSI report on the first physical layer channel.

22. The method used in the first node device according to claim 21, comprising:

receiving a first information block,
wherein the first information block is used for determining a first time unit set; whether the first RS resource set is executed in the first time window or not depends on whether time domain resources occupied by the first RS resource set in the first time window are orthogonal to the first time unit set; when the time domain resource occupied by the first RS resource set in the first time window is orthogonal to the first time unit set, the first RS resource set is executed in a first time window; and when the time domain resource occupied by the first RS resource set in the first time window belongs to the first time unit set, the first RS resource set is not executed in the first time window.

23. A method used in a second node device for wireless communication, comprising:

transmitting a first CSI report configuration, the first CSI report configuration being used for configuring a first RS resource set, and the first RS resource set comprising at least one RS resource configured for at least one of channel measurement or interference measurement,
wherein a first physical layer channel is configured for a first CSI report, the first RS resource set comprises, in a time domain, some or all time domain resources in a first time window, the processing for the first CSI report on the first physical layer channel depends on whether the first RS resource set is executed in the first time window or not, and the execution is transmission, or the execution is reception.

24. The method used in the second node device according to claim 23, comprising:

receiving the first CSI report on the first physical layer channel, or abandoning receiving the first CSI report on the first physical layer channel,
wherein the processing for the first CSI report on the first physical layer channel comprises whether the first CSI report is transmitted on the first physical layer channel; when the first RS resource set is executed in the first time window, the first CSI report is transmitted on the first physical layer channel; and when the first RS resource set is not executed in the first time window, the first CSI report is abandoned from being transmitted on the first physical layer channel.

25. The method used in the second node device according to claim 23, comprising:

receiving the first CSI report on the first physical layer channel,
wherein when the first RS resource set is executed in the first time window, the first RS resource set in the first time window is used for at least one of channel measurement or interference measurement for the first CSI report; and when the first RS resource set is not executed in the first time window, the first CSI report on the first physical layer channel is not updated.

26. The method used in the second node device according to any one of claim 23 to 25, comprising:
the processing for the first CSI report on the first physical layer channel comprising whether the first CSI report on the first physical layer channel occupies a CSI processing unit from a first symbol; and when the first RS resource set is executed in the first time window, the first CSI report on the first physical layer channel occupies the CSI processing unit from the first symbol.

27. The method used in the second node device according to any one of claim 23 to 26, comprising:
when the first RS resource set is executed in the first time window, the first CSI report on the first physical layer channel occupies the CSI processing unit from the first symbol until the last symbol of the first physical layer channel.

28. The method used in the second node device according to any one of claim 23 to 27, comprising:
a start symbol of the first time window being the first symbol of the earliest RS resource of the first RS resource set in the first occasion set, or the start symbol of the first time window being the first symbol of the earliest RS occasion in a first occasion set; and the first occasion set comprises the latest RS occasion of each RS resource in the first RS resource set that is not later than a CSI reference resource of the first CSI report on the first physical layer channel.

29. The method used in the second node device according to claim 28, comprising:

transmitting a first information block,
wherein the first information block is used for determining a first time unit set; whether the first RS resource set is executed in the first time window or not depends on whether time domain resources occupied by the first RS resource set in the first time window are orthogonal to the first time unit set; when the time domain resource occupied by the first RS resource set in the first time window is orthogonal to the first time unit set, the first RS resource set is executed in a first time window; and when the time domain resource occupied by the first RS resource set in the first time window belongs to the first time unit set, the first RS resource set is not executed in the first time window.

30. The method used in the second node device according to claim 28 or 29, comprising:
whether the first RS resource set is executed in the first time window depends on whether the first physical layer channel and a second time unit set are orthogonal in a time domain; when the first physical layer channel and the second time unit set are orthogonal in the time domain, the first RS resource set is executed in the first time window; and when the first physical layer channel belongs to the second time unit set in the time domain, the first RS resource set is not executed in the first time window.

100

First node

↓

Receive a first CSI report configuration — 101

Fig. 1

**5GS/EPS 200**

HSS/UDM — 220

NG-RAN
**202**

UE — 201

NR node B — 203

MME/A MF/SMF — 211

Other MME/A MF/SMF — 214

UE — 241

Other NR node B — 204

S-GW/UPF — 212

P-GW/UPF — 213

Internet service — 230

**5GC/EPC**
**210**

Fig. 2

Control plane
300

| L3 | RRC — 306 |
| L2 | PDCP — 304 |
| | RLC — 303 |
| | MAC — 302 |
| L1 | PHY — 301 |

305

User plane
350

| L2 | SDAP — 356 |
| | PDCP — 354 |
| | RLC — 353 |
| | MAC — 352 |
| L1 | PHY — 351 |

355

Fig. 3

Fig. 4

Fig. 5

When the first RS resource set is executed in the first time window → the first CSI report is transmitted on the first physical layer channel

When the first RS resource set is not executed in the first time window → the first CSI report is abandoned from being transmitted on the first physical layer channel

the processing for the first CSI report on the first physical layer channel comprises: whether the first CSI report is transmitted on the first physical layer channel

Fig. 6

When the first RS resource set is executed in the first time window → the first RS resource set in the first time window is used for at least one of channel measurement or interference measurement for the first CSI report, and the first CSI report is transmitted on the first physical layer channel

When the first RS resource set is not executed in the first time window → the first CSI report on the first physical layer channel is not updated

Fig. 7

When the first RS resource set is executed in the first time window → the first CSI report on the first physical layer channel occupies a CSI processing unit from the first symbol

The processing for the first CSI report on the first physical layer channel comprises: targeting whether the first CSI report on the first physical layer channel occupies a CSI processing unit from a first symbol

Fig. 8

the first CSI report on the first physical layer channel — From a first symbol to the last symbol of the first physical layer channel → occupies a CSI processing unit

the first RS resource set is executed in the first time window

Fig. 9

the first CSI report on the first physical layer channel — From a first symbol to M symbols behind a second symbol → occupies a CSI processing unit

the first RS resource set is executed in the first time window

Fig. 10

A start symbol of the first time window is a first symbol of the earliest RS resource
of the first RS resource set in a first occasion set

The first occasion set  ⎯⎯⎯⎯ comprises ⎯⎯⎯⎯▶  the latest RS occasion of each RS resource in the
first RS resource set that is not later than a CSI
reference resource of the first CSI report on the
first physical layer channel

Fig. 11A

A start symbol of the first time window is a first symbol of the earliest occasion in a
first occasion set

The first occasion set  ⎯⎯⎯⎯ comprises ⎯⎯⎯⎯▶  the latest RS occasion of each RS resource in the
first RS resource set that is not later than a CSI
reference resource of the first CSI report on the
first physical layer channel

Fig. 11B

1200

First receiver
1201

First node
device

First transmitter
1202

Optional

Fig. 12

1300

Second transmitter
1301

Second node
device

Second receiver
1302

Optional

Fig. 13

## INTERNATIONAL SEARCH REPORT

| | International application No. |
|---|---|
| | **PCT/CN2024/072313** |

### A.    CLASSIFICATION OF SUBJECT MATTER

H04W24/08(2009.01)i

According to International Patent Classification (IPC) or to both national classification and IPC

### B.    FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, VEN, ENTXT, CNKI, 3GPP: 信道状态信息, 上报, 时域, 参考信号, 发送, 执行, 时间窗, CSI, report+, time domain, RS, reference signal, transmit+, perform+, time window

### C.    DOCUMENTS CONSIDERED TO BE RELEVANT

| Category* | Citation of document, with indication, where appropriate, of the relevant passages | Relevant to claim No. |
|---|---|---|
| X | SAMSUNG. "LAA CSI Reporting" *3GPP TSG RAN WG1 Meeting #83, R1-156772*, 07 November 2015 (2015-11-07), part 2 | 1-30 |
| A | CN 109802804 A (HUAWEI TECHNOLOGIES CO., LTD.) 24 May 2019 (2019-05-24) entire document | 1-30 |
| A | CN 110958093 A (RESEARCH INSTITUTE OF CHINA MOBILE COMMUNICATIONS CORP. et al.) 03 April 2020 (2020-04-03) entire document | 1-30 |
| A | CN 110971382 A (VIVO MOBILE COMMUNICATION CO., LTD.) 07 April 2020 (2020-04-07) entire document | 1-30 |
| A | CN 111565453 A (RESEARCH INSTITUTE OF CHINA MOBILE COMMUNICATIONS CORP. et al.) 21 August 2020 (2020-08-21) entire document | 1-30 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 March 2024** | **03 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 654 653 A1**

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 109802804 | A | 24 May 2019 | WO | 2019096172 | A1 | 23 May 2019 |
| CN | 110958093 | A | 03 April 2020 | | None | | |
| CN | 110971382 | A | 07 April 2020 | EP | 3860019 | A1 | 04 August 2021 |
| | | | | EP | 3860019 | A4 | 02 March 2022 |
| | | | | US | 2021218453 | A1 | 15 July 2021 |
| | | | | JP | 2022501967 | A | 06 January 2022 |
| | | | | JP | 7285920 | B2 | 02 June 2023 |
| | | | | SG | 11202103262 | PA | 29 April 2021 |
| | | | | KR | 20210065181 | A | 03 June 2021 |
| | | | | AU | 2019351179 | A1 | 27 May 2021 |
| | | | | AU | 2019351179 | B2 | 22 December 2022 |
| | | | | CA | 3114818 | A1 | 02 April 2020 |
| CN | 111565453 | A | 21 August 2020 | | None | | |

Form PCT/ISA/210 (patent family annex) (July 2022)